# EUROPEAN PATENT SPECIFICATION

(11) **EP 3 786 105 B1**
(45) Date of publication and mention of the grant of the patent: **10.05.2023**
(21) Application number: 19792606.6
(22) Date of filing: 16.04.2019
(51) Int. Cl.: B66F 9/24, G05D 1/00, H04Q 9/00, B66F 9/075

(54) **INDUSTRIAL VEHICLE REMOTE OPERATION SYSTEM, INDUSTRIAL VEHICLE, INDUSTRIAL VEHICLE REMOTE OPERATION PROGRAM, AND INDUSTRIAL VEHICLE REMOTE OPERATION METHOD**
FERNBEDIENUNGSSYSTEM FÜR INDUSTRIEFAHRZEUG, INDUSTRIEFAHRZEUG, FERNBEDIENUNGSPROGRAMM FÜR INDUSTRIEFAHRZEUG UND FERNBEDIENUNGSVERFAHREN FÜR INDUSTRIEFAHRZEUG
SYSTÈME DE COMMANDE À DISTANCE DE VÉHICULE INDUSTRIEL, VÉHICULE INDUSTRIEL, PROGRAMME DE COMMANDE À DISTANCE DE VÉHICULE INDUSTRIEL, ET PROCÉDÉ DE COMMANDE À DISTANCE DE VÉHICULE INDUSTRIEL

(30) Priority: 23.04.2018 JP 2018082240
(43) Date of publication of application: 03.03.2021
(73) Proprietor: Kabushiki Kaisha Toyota Jidoshokki, Kariya-shi, Aichi 448-8671 (JP)
(72) Inventor: KAMIYA Tomonori, Kariya-shi, Aichi 448-8671 (JP)
(74) Representative: TBK
(86) International application number: PCT/JP2019/016384
(87) International publication number: WO 2019/208341

(56) References cited:
- EP-A1- 3 035 074
- WO-A1-2015/147140
- JP-A- H0 961 508
- JP-A- H0 961 508
- JP-A- 2000 106 570
- JP-A- 2001 042 940
- US-A1- 2017 372 184

## Description

### TECHNICAL FIELD

The present invention relates to an industrial vehicle remote operation system, an industrial vehicle, an industrial vehicle remote operation program, and an industrial vehicle remote operation method.

### BACKGROUND ART

Patent Literature 1 describes that a remote control device serving as a remote operation device that remotely operates a forklift serving as an industrial vehicle remotely operates the cargo handling work of the forklift from a position distant from the forklift.

### Citations List

### Patent Literature

Patent Literature 1: Japanese Patent Application Publication No. 2002-104800

*Further prior art can be found in document* US 2017/372184 A1*, disclosing indirect electronic badge tracking. According to this document, electronic badges are indirectly tracked by detecting, by a badge communicator on an industrial vehicle of a fleet of industrial vehicles, the presence of an electronic badge and performing a badge logging transaction in response to detecting the electronic badge. The badge logging transaction includes receiving, by the badge communicator, a badge identifier transmitted by the detected electronic badge. The badge logging transaction also includes determining, by the badge communicator, an offset measurement of the electronic badge relative to the industrial vehicle, electronically determining a vehicle location of the industrial vehicle, and identifying a badge location based upon the determined vehicle location and the measured offset. The badge logging transaction can also include generating a time stamp, and wirelessly communicating a badge locator message to a remote server, the badge locator message including the badge identifier, the badge location, and the timestamp.* US 2017/372184 A1 *discloses an industrial vehicle remote operation system according to the preamble of the independent claim 1, an industrial vehicle according to the preamble of the independent claim 9 and an industrial vehicle remote operation method according to the preamble of the independent claim 10.*

### SUMMARY OF INVENTION

### Technical Problems

In an industrial vehicle remote operation system, remotely operating an industrial vehicle using wireless communication is considered. For example, a configuration of an industrial vehicle remote operation system to remotely operate an industrial vehicle by transmitting a remote instruction signal from one remote communication unit provided in a remote operation device to a vehicle communication unit provided in the industrial vehicle by wireless communication is considered.

Here, when the industrial vehicle moves out of the communication range of the remote communication unit, the remote instruction signal is not transmitted and received, which may hinder the remote operation of the industrial vehicle. Therefore, the traveling range of the industrial vehicle is limited to the communication range of one remote communication unit, and there is a concern that convenience and versatility will decrease.

The present invention has been made in view of the above circumstances, and an object thereof is to provide an industrial vehicle remote operation system, an industrial vehicle, and an industrial vehicle remote operation program, and an industrial vehicle remote operation method capable of expanding the traveling range of the industrial vehicle to be remotely operated.

### Solutions to Problems

An industrial vehicle remote operation system for achieving the above object relates to an industrial vehicle remote operation system including an industrial vehicle having a plurality of vehicle communication units including a first vehicle communication unit and a second vehicle communication unit that perform wireless communication; and a remote operation device having a plurality of remote communication units that are arranged spaced apart from each other and perform wireless communication. The remote operation device remotely operates the industrial vehicle by transmitting a remote instruction signal instructing remote operation using at least one of the plurality of remote communication units. The first vehicle communication unit, when in a first communication connection state of being communicatively connected to a first target remote communication unit among the plurality of remote communication units, receives the remote instruction signal transmitted from the first target remote communication unit The industrial vehicle includes, a searching unit that searches for a second target remote communication unit that is different from the first target remote communication unit among the plurality of remote communication units using the second vehicle communication unit, a determination unit that determines whether or not to communicatively connect the second target remote communication unit and the second vehicle communication unit based on a reception radio wave intensity of a signal that is transmitted from the second target remote communication unit and received by the second vehicle communication unit in a situation of the first communication connection state, and a communication connection unit that communicatively connects the second target remote communication unit and the second vehicle communication unit based on an affirmative determination result of the determination unit. The second vehicle communication unit, when in a second communication connection state of being communicatively connected to the second target remote communication unit, receives the remote instruction signal transmitted from the second target remote communication unit. The industrial vehicle includes a connection release unit that releases the first communication connection state so as to allow the first vehicle communication unit communicatively to connect with one of the plurality of remote communication units based on the second vehicle communication unit receiving the remote instruction signal from the second target remote communication unit.

According to such a configuration, when the first vehicle communication unit and the first target remote communication unit are communicatively connected and in the first communication connection state, the remote instruction signal transmitted from the first target remote communication unit is received by the first vehicle communication unit. The remote operation of the industrial vehicle is thereby performed.

In a case of the first communication connection state, a search for the second target remote communication unit is performed, and whether or not to communicatively connect the second target remote communication unit and the second vehicle communication unit is determined. Then, based on the determination result of the determination being a positive determination, the second target remote communication unit and the second vehicle communication unit are communicatively connected and in the second communication connection state, and the remote instruction signal that is transmitted from the first target remote communication unit can be received by the first vehicle communication unit. Thus, even if the industrial vehicle moves out of the communication range of the first target remote communication unit, the remote operation of the industrial vehicle can be continuously performed.

On the other hand, the first communication connection state is released based on the fact that the second vehicle communication unit has received the remote instruction signal. Thus, the first vehicle communication unit can be communicatively connected to any of the plurality of remote communication units. As a result, if the industrial vehicle moves into the communication range of the remote communication unit that can be connected for communication, the remote communication unit and the first vehicle communication unit are connected by communication, and the remote instruction signal is transmitted.

Therefore, even when the industrial vehicle moves so as to cross the communication range of a plurality of remote communication units, the industrial vehicle can continue to receive the remote instruction signal and the remote operation of the industrial vehicle can be continuously performed. Therefore, the traveling range of the industrial vehicle can be expanded as compared with a case where there is one remote communication unit.

In the industrial vehicle remote operation system, the determination unit preferably determines whether or not a state in which a second reception radio wave intensity serving as the reception radio wave intensity is higher than a first reception radio wave intensity which is a reception radio wave intensity of a signal that is transmitted from the first target remote communication unit and received by the first vehicle communication unit by greater than or equal to a threshold is continued over a prescribed period.

According to such a configuration, the second target remote communication unit and the second vehicle communication unit are communicatively connected based on the fact that the state in which the second reception radio wave intensity is higher than the first reception radio wave intensity by greater than or equal to a threshold is continued over the prescribed period. Thus, even if the second reception radio wave intensity becomes higher than the first reception radio wave intensity by greater than or equal to a threshold due to an error in the reception radio wave intensity, the second target remote communication unit and the second vehicle communication unit are not communicatively connected immediately and hence the communication connection based on erroneous determination can be suppressed.

In the industrial vehicle remote operation system, the determination unit preferably determines whether or not the reception radio wave intensity is gradually increased over a prescribed period.

When the reception radio wave intensity gradually increases, there is a high possibility the industrial vehicle is approaching the second target remote communication unit. In this respect, according to the present configuration, the communication connection between the second target remote communication unit and the second vehicle communication unit is performed based on the fact that the reception radio wave intensity is gradually increasing over the prescribed period. Thus, the remote operation of the industrial vehicle advancing in the advancing direction can be suitably performed by transmitting and receiving the remote instruction signal between the second target remote communication unit that is likely to be in the advancing direction and the second vehicle communication unit.

The industrial vehicle remote operation system preferably further includes a preceding communication connection unit that communicatively connects the second target remote communication unit and the second vehicle communication unit without waiting for the determination result of the determination unit when the first communication connection state is released in a situation where determination is performed by the determination unit.

According to this configuration, when the first communication connection state is released during the determination of the determination unit, the second target remote communication unit and the second vehicle communication unit are communicatively connected without waiting for the determination result, and the remote instruction signal is transmitted and received. Thus, the period during which the remote instruction signal is not transmitted and received can be shortened. Therefore, the hindrance to the remote operation when the first communication connection state is released by the movement of the industrial vehicle to outside the communication range of the first target remote communication unit during the determination by the determination unit can be suppressed.

Preferably, in the industrial vehicle remote operation system, the searching unit repeatedly performs a searching process of searching for the remote communication unit existing within a communication range of the second vehicle communication unit, and selects the second target remote communication unit from one or more remote communication units searched by the searching process. Preferably, the searching unit preferentially selects the remote communication unit of current determination target of the determination unit as the second target remote communication unit when a plurality of the remote communication units are searched in the searching processing in a situation where determination is performed by the determination unit.

With this configuration, a remote communication unit different from the remote communication unit serving as the target of determination during the determination of the determination unit can be prevented from being selected as the second target remote communication unit, so that erroneous determination due to change in the second target remote communication unit during the determination can be suppressed.

In the industrial vehicle remote operation system, the industrial vehicle preferably includes a communication abnormality determination unit that determines communication abnormality when the first communication connection state is released in a situation where the second target remote communication unit is not searched by the searching unit over an error determination period.

According to this configuration, when the second target remote communication unit is not searched over the error determination period and the first communication connection state is released, there is a high possibility both of the vehicle communication units cannot receive the remote instruction signal. In this case, it is possible to deal with the situation in which the remote instruction signal cannot be transmitted and received by determining as communication abnormality.

In the industrial vehicle remote operation system, the industrial vehicle preferably includes a first wireless unit having a first wireless module as the first vehicle communication unit, and a first wireless microcomputer that controls the first wireless module, and a second wireless unit having a second wireless module as the second vehicle communication unit, and a second wireless microcomputer that controls the second wireless module. The first wireless unit and the second wireless unit preferably exchange information with each other.

According to such a configuration, both vehicle communication units have wireless microcomputers, respectively, and exchange information with each other. Thus, both wireless microcomputers can independently execute the process of controlling the communication connection of the wireless modules while exchanging information with each other. Therefore, the processing load can be reduced as compared with the configuration in which one wireless microcomputer controls two wireless modules.

Moreover, even if an abnormality occurs in one of the wireless microcomputers, the wireless communication can be continued using the other wireless microcomputer, and thus the remote operation of the industrial vehicle can be continued.

Preferably, in the industrial vehicle remote operation system, the first vehicle communication unit is a first wireless module, the second vehicle communication unit is a second wireless module, and the industrial vehicle remote operation system includes a single wireless unit having a wireless microcomputer that controls the first wireless module and the second wireless module.

With this configuration, the configuration can be simplified as compared with the configuration in which the wireless unit is provided for each wireless module.

An industrial vehicle for achieving the above object relates to an industrial vehicle remotely operated by a remote instruction signal that instructs remote operation transmitted using at least one of a plurality of remote communication units arranged spaced apart from each other in a remote operation device. The industrial vehicle includes a plurality of vehicle communication units including a first vehicle communication unit and a second vehicle communication unit that perform wireless communication. The first vehicle communication unit, when in a first communication connection state of being communicatively connected to a first target remote communication unit among the plurality of remote communication units, receives the remote instruction signal transmitted from the first target remote communication unit. The industrial vehicle includes a searching unit that searches for a second target remote communication unit that is different from the first target remote communication unit among the plurality of remote communication units using the second vehicle communication unit, a determination unit that determines whether or not to communicatively connect the second target remote communication unit and the second vehicle communication unit based on a reception radio wave intensity of a signal that is transmitted from the second target remote communication unit and received by the second vehicle communication unit in a situation of the first communication connection state, and a communication connection unit that communicatively connects the second target remote communication unit and the second vehicle communication unit based on an affirmative determination result of the determination unit. The second vehicle communication unit, when in a second communication connection state of being communicatively connected to the second target remote communication unit, receives the remote instruction signal transmitted from the second target remote communication unit. The industrial vehicle includes a connection release unit that releases the first communication connection state so as to allow the first vehicle communication unit to communicatively connect with one of the plurality of remote communication units based on the second vehicle communication unit receiving the remote instruction signal from the second target remote *communication unit.*

*An industrial* vehicle remote operation method for achieving the above object relates to an industrial vehicle remote operation method that uses a remote operation device to remotely operate an industrial vehicle. The remote operation device has a plurality of remote communication units that are arranged spaced apart from each other and perform wireless communication, and transmits a remote instruction signal instructing remote operation using at least one of the plurality of remote communication units. The industrial vehicle has a plurality of vehicle communication units including a first vehicle communication unit and a second vehicle communication unit that perform wireless communication. The industrial vehicle remote operation method includes the steps of a first receiving step in which the first vehicle communication unit, when in a first communication connection state of being communicatively connected to a first target remote communication unit among the plurality of remote communication units, receives the remote instruction signal transmitted from the first target remote communication unit; a searching step in which the industrial vehicle searches for a second target remote communication unit that is different from the first target remote communication unit among the plurality of remote communication units using the second vehicle communication unit; a determination step in which the industrial vehicle determines whether or not to communicatively connect the second target remote communication unit and the second vehicle communication unit based on a reception radio wave intensity of a signal that is transmitted from the second target remote communication unit and received by the second vehicle communication unit in a situation of the first communication connection state; a communication connection step in which the industrial vehicle communicatively connects the second target remote communication unit and the second vehicle communication unit based on an affirmative determination result of the determination step; a second receiving step in which the second vehicle communication unit, when in a second communication connection state of being communicatively connected to the second target remote communication unit, receives the remote instruction signal transmitted from the second target remote communication unit; and a connection release step in which the industrial vehicle releases the first communication connection state so as to allow the first vehicle communication unit to communicatively connect with one of the plurality of remote communication units based on the second vehicle communication unit receiving the remote instruction signal from the second target remote communication unit.

*An industrial vehicle remote operation program for achieving the above object relates to an industrial vehicle remote operation program comprising instructions which, when the program is executed by a computer, case the computer to carry out the above industrial vehicle remote operation method.*

According to such a configuration, when the first vehicle communication unit and the first target remote communication unit are communicatively connected and in the first communication connection state, the remote instruction signal that is transmitted from the first target remote communication unit is received by the first vehicle communication unit. The remote operation of the industrial vehicle is thereby performed.

In a case of the first communication connection state, a search for the second target remote communication unit is performed, and whether or not to communicatively connect the second target remote communication unit and the second vehicle communication unit is determined. Then, based on the determination result of the determination being a positive determination, the second target remote communication unit and the second vehicle communication unit are communicatively connected and in the second communication connection state, and the remote instruction signal transmitted from the first target remote communication unit can be received by the first vehicle communication unit. Thus, even if the industrial vehicle moves out of the communication range of the first target remote communication unit, the remote operation of the industrial vehicle can be continuously performed.

On the other hand, the first communication connection state is released based on the fact that the second vehicle communication unit has received the remote instruction signal. Thus, the first vehicle communication unit can be communicatively connected to any of the plurality of remote communication units. As a result, if the industrial vehicle moves into the communication range of the remote communication unit that can be connected for communication, the remote communication unit and the first vehicle communication unit are connected by communication, and the remote instruction signal is transmitted.

Therefore, even when the industrial vehicle moves so as to cross the communication range of a plurality of remote communication units, the industrial vehicle can continue to receive the remote instruction signal and the remote operation of the industrial vehicle can be continuously performed. Therefore, the traveling range of the industrial vehicle can be expanded as compared with a case where there is one remote communication unit.

### Advantageous Effects of Invention

According to the present invention, the traveling range of an industrial vehicle that is remotely operated can be expanded.

### BRIEF DESCRIPTION OF DRAWINGS

FIG. 1 is a schematic view showing an outline of an industrial vehicle remote operation system, and the like.
FIG. 2 is a schematic view showing an outline of a forklift and a control room installed in a workplace.
FIG. 3 is a block diagram showing an electrical configuration of an industrial vehicle remote operation system of the first embodiment.
FIG. 4 is a flowchart showing a main communication control process of the first embodiment.
FIG. 5 is a flowchart showing a main connection in-progress process.
FIG. 6 is a flowchart showing a sub communication control process of the first embodiment.
FIG. 7 is a flowchart showing a sub connection in-progress process.
FIG. 8 at (a) is a time chart showing the state change of the main wireless module when the forklift moves; FIG. 8 at (b) is a time chart showing the state change of the sub wireless module when the forklift moves; FIG. 8 at (c) is a time chart showing the state change of the first AP when the forklift moves; FIG. 8 at (d) is a time chart showing the state change of the second AP when the forklift moves; and FIG. 8 at (e) is a time chart showing the state change of the third AP when the forklift moves.
FIG. 9 is a block diagram showing an electrical configuration of an industrial vehicle remote operation system of a second embodiment.
FIG. 10 is a flowchart showing a main communication control process of the second embodiment.
FIG. 11 is a flowchart showing a sub communication control process of the second embodiment.

### First embodiment

Hereinafter, a first embodiment of an industrial vehicle remote operation system and the like will be described.

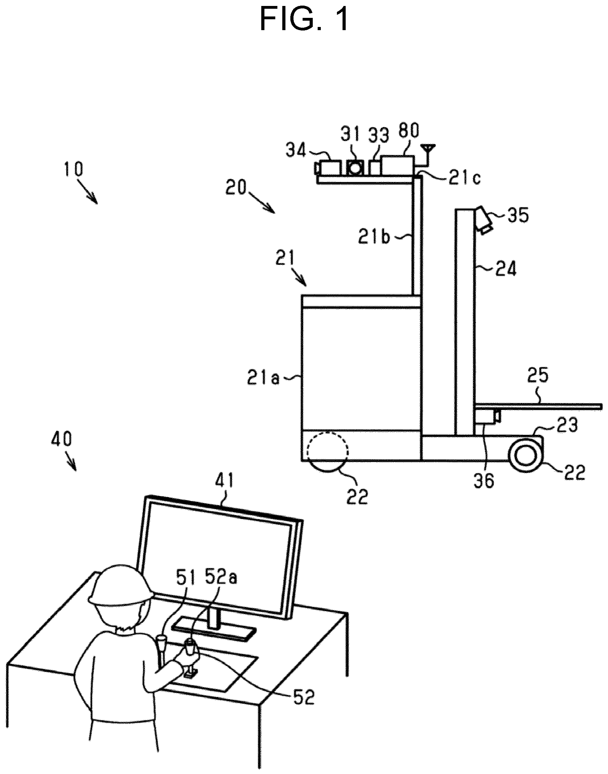

As shown in FIG. 1, an industrial vehicle remote operation system 10 includes a forklift 20 serving as an industrial vehicle, a remote operation device 40 used to remotely operate the forklift 20, a travel controller 51 serving as a first operation unit, and a cargo handling controller 52 serving as a second operation unit.

The forklift 20 is, for example, a reach type that allows the occupant to get on in a standing state. The forklift 20 includes a machine base 21, wheels 22, a pair of left and right reach legs 23 extending forward with respect to the machine base 21, a mast 24 standing upright with respect to the reach leg 23, and a fork 25 attached to the mast 24.

The machine base 21 includes a machine base main body 21a to which the wheels 22 are attached, a standing frame 21b standing upright from the machine base main body 21a, and a roof 21c attached to the distal end of the standing frame 21b.

The mast 24 is attached to the reach leg 23 in a state in which it is slidably movable in the front-back direction and tiltably movable in the front-back direction. The fork 25 is attached to the mast 24 so as to be movable in the up-down direction. The fork 25 thus can perform the lift movement, the reach movement, and the tilt movement.

Here, movements related to the fork 25, such as a lift movement, a reach movement, and a tilt movement, are referred to as a cargo handling movement. The cargo handling movement is a movement that is different from the traveling movement. It can be said that the traveling movement is the first movement and the cargo handling movement is the second movement. The cargo handling movement may be one of a lift movement, a reach movement, and a tilt movement.

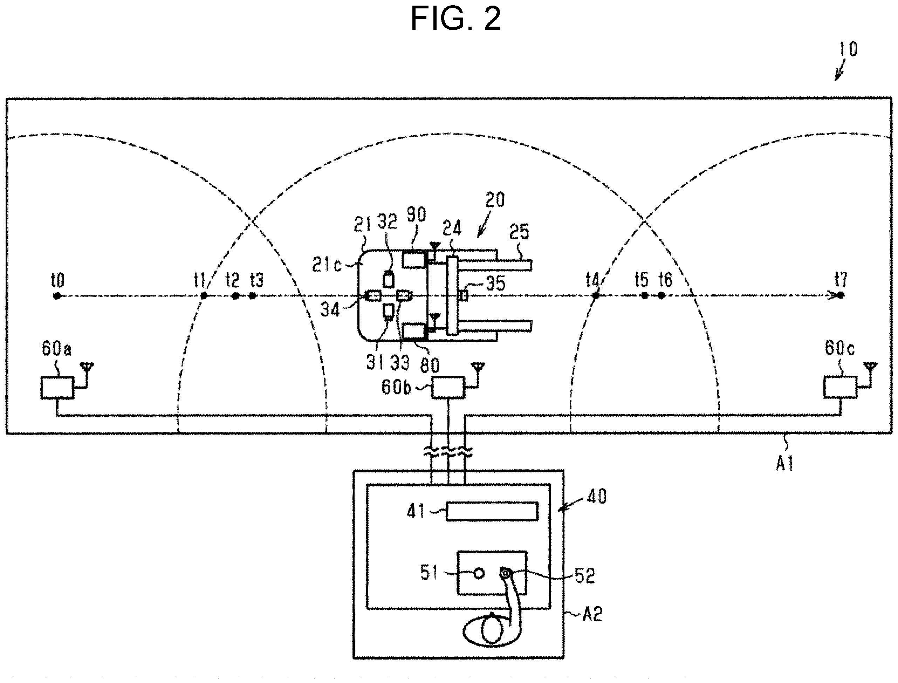

Note that the forklift 20 may be configured to be subjected to manned operation in which the occupant gets on the vehicle and performs direct operation, or may be configured to be subjected only to the remote operation without the manned operation being performed. As shown in FIGS. 1 and 2, the forklift 20 includes a plurality of cameras 31 to 36. The plurality of cameras 31 to 36 are provided to photograph a part of or the periphery of the forklift 20. The plurality of cameras 31 to 36 are arranged so that their viewpoints are different from each other. Therefore, the viewpoints of the images photographed by the plurality of cameras 31 to 36 are different from each other. In other words, it can be said that each image has a different photographing position or photographing angle.

The first camera 31 to the fourth camera 34 are installed on the roof 21c. Specifically, as shown in FIG. 2, the first camera 31 is installed on the roof 21c in a state of facing the right, and the second camera 32 is installed on the roof 21c in a state of facing the left. The first camera 31 and the second camera 32 are arranged to face each other in the left-right direction of the forklift 20.

Similarly, the third camera 33 is installed on the roof 21c in a state of facing the front, and the fourth camera 34 is installed on the roof 21c in a state of facing the back. The third camera 33 and the fourth camera 34 are arranged to face each other in the front-back direction of the forklift 20.

As shown in FIG. 1, the fifth camera 35 is arranged at the distal end of the mast 24 in a state of facing diagonally downward so that the fork 25 or a load loaded on the fork 25 is photographed. The sixth camera 36 is installed on the lower surface of the fork 25 in a state of facing the front so that the vicinity of the distal end of the fork 25 is photographed.

The fifth camera 35 is fixed to the mast 24. For this reason, when the mast 24 slidably moves or tiltably moves in the front-back direction, the fifth camera 35 slidably moves or tiltably moves accompanying therewith, so that the fifth camera 35 photographs the fork 25 and the like regardless of the slidable movement or the tiltable movement of the mast 24.

Similarly, the sixth camera 36 is fixed to the fork 25. Therefore, since the sixth camera 36 moves up and down as the fork 25 moves up and down, the sixth camera 36 photographs the vicinity of the distal end of the fork 25 regardless of the up and down movement of the fork 25.

As shown in FIG. 2, the main configuration of the remote operation device 40 in the present embodiment is provided, for example, in a place where the forklift 20 cannot be visually recognized, specifically, a control room A2 which is a room that is different from a workplace A1 where the forklift 20 performs work.

As shown in FIG. 1, the remote operation device 40 includes a monitor 41 serving as a display unit. At least one of the plurality of images captured by the plurality of cameras 31 to 36 is displayed on the monitor 41.

A travel controller 51 and a cargo handling controller 52 are connected to the remote operation device 40. The travel controller 51 and the cargo handling controller 52 are, for example, lever-type controllers that can be tilted, and are assumed to be used while being held by a remote operator.

The travel controller 51 is used for remote operation of the traveling movement of the forklift 20 by the remote operation device 40 (hereinafter, simply referred to as "traveling remote operation").

The cargo handling controller 52 is used for remote operation of the cargo handling movement of the forklift 20 by the remote operation device 40 (hereinafter, simply referred to as "cargo handling remote operation").

In the present embodiment, the cargo handling controller 52 is provided with a movement changeover switch 52a in correspondence with the setting of a plurality of types of movements such as a lift movement, a reach movement, and a tilt movement as the cargo handling movement. The movement changeover switch 52a is used to change the target cargo handling movement which is a target movement among the plurality of types of movements.

In the industrial vehicle remote operation system 10 of the present embodiment, the remote operator operates both controllers 51 and 52 while checking the image displayed on the monitor 41 to remotely operate the forklift 20 from the position (specifically, in the control room A2) where the forklift 20 cannot be directly visually recognized.

Next, the electrical configuration of the industrial vehicle remote operation system 10 will be described.

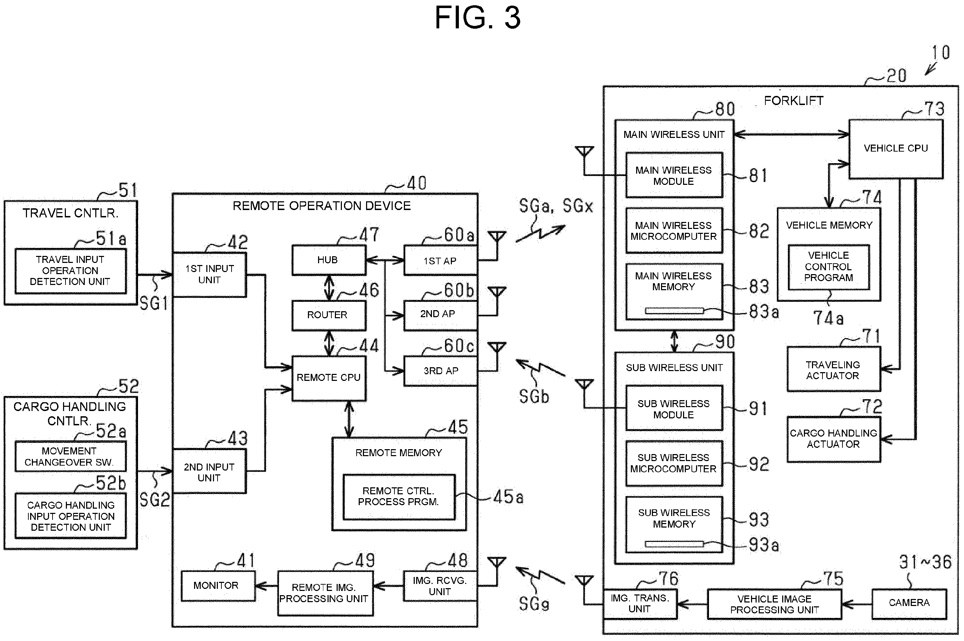

As shown in FIG. 3, the travel controller 51 includes a travel input operation detection unit 51a that detects a travel input operation serving as a first input operation which is a type of operation on the travel controller 51. In the present embodiment, the travel input operation detection unit 51a detects a tilting operation of the travel controller 51 as a travel input operation. Specifically, the travel input operation detection unit 51a detects whether or not the tilting operation of the travel controller 51 is performed, and when the tilting operation is performed, detects the tilting direction and the tilting angle thereof.

The travel controller 51 outputs a traveling system detection signal SG1 including the detection result of the travel input operation detection unit 51a. For example, the traveling system detection signal SG1 includes information regarding the presence or absence of the travel input operation and the operation mode (tilting direction and tilting angle) of the travel input operation when the travel input operation is performed.

The cargo handling controller 52 includes a cargo handling input operation detection unit 52b that detects a cargo handling input operation serving as a second input operation which is a type of operation on the cargo handling controller 52. In the present embodiment, the cargo handling input operation detection unit 52b detects a tilting operation of the cargo handling controller 52 as a cargo handling input operation. Specifically, the cargo handling input operation detection unit 52b detects whether or not the tilting operation of the cargo handling controller 52 is performed, and when the tilting operation is performed, detects the tilting direction and the tilting angle thereof.

Furthermore, the cargo handling input operation detection unit 52b detects the operation of the movement changeover switch 52a. Specifically, the cargo handling input operation detection unit 52b changes the target cargo handling movement in the order of lift movement → reach movement → tilt movement each time the movement changeover switch 52a is operated.

The cargo handling controller 52 outputs a cargo handling system detection signal SG2 including the detection result of the cargo handling input operation detection unit 52b. For example, the cargo handling system detection signal SG2 includes information regarding the presence or absence of a cargo handling input operation and the operation mode (tilting direction and tilting angle) thereof when the cargo handling input operation is performed, and information for specifying the target cargo handling movement.

The remote operation device 40 includes a first input unit 42, a second input unit 43, a remote CPU 44, a remote memory 45, a router 46 and a hub 47, an image receiving unit 48, a remote image processing unit 49, and a plurality of APs (access points) 60a to 60c serving as a plurality of remote communication units.

The first input unit 42 receives the traveling system detection signal SG1 output from the travel controller 51. The second input unit 43 receives the cargo handling system detection signal SG2 output from the cargo handling controller 52. The input units 42 and 43 are connected to the controllers 51 and 52 by wired communication or wireless communication.

Although the specific configuration of the input units 42 and 43 is arbitrary, for example, when the input units 42 and 43 and the controllers 51 and 52 are connected by wired communication such as a cable, the input units 42 and 43 are connectors to which a cable or the like connected, and when connected by wireless communication, the input units 42 and 43 are wireless receiving devices.

The remote CPU 44 is electrically connected to both the input units 42 and 43. The detection signals SG1 and SG2 are input to the remote CPU 44 through the input units 42 and 43. The remote CPU 44 generates a remote instruction signal SGa for instructing the remote operation on the forklift 20 by executing a remote control process program 45a which is a type of an industrial vehicle remote operation program stored in the remote memory 45.

The specific data structure of the remote instruction signal SGa and the specific configuration of the remote control process program 45a are arbitrary, but for example, the following configurations can be considered.

For example, the remote instruction signal SGa is a signal in a wireless communication format that includes travel instruction information which is instruction information regarding traveling movement and cargo handling instruction information which is instruction information regarding cargo handling movement. The travel instruction information includes, for example, at least one of a traveling speed instruction value, an acceleration instruction value, and a steering angle instruction value, and the cargo handling instruction information includes, for example, at least one of a lift movement instruction value, a reach movement instruction value, or a tilt movement instruction value.

The remote CPU 44 sets the travel instruction information of the remote instruction signal SGa based on the operation mode of the travel input operation. For example, the remote CPU 44 determines the forward/backward movement and the steering angle in correspondence with the tilting direction of the travel controller 51, and determines the traveling speed and the acceleration in correspondence with the tilting angle. Then, the remote CPU 44 sets various determined parameters in the travel instruction information. The remote CPU 44 sets the travel instruction information so as to stop the traveling movement or maintain the stopped state when the travel input operation is not performed.

Furthermore, the remote CPU 44 sets the cargo handling instruction information of the remote instruction signal SGa based on the operation mode of the cargo handling input operation. For example, the remote CPU 44 specifies which of the lift movement, the reach movement and the tilt movement the target cargo handling movement is based on the information for specifying the target cargo handling movement included in the cargo handling system detection signal SG2. Then, the remote CPU 44 determines the movement direction corresponding to the tilting direction of the cargo handling controller 52, and determines the movement speed in correspondence with the tilting angle. Then, the remote CPU 44 sets various determined parameters in the cargo handling instruction information. That is, the remote CPU 44 sets the cargo handling instruction information such that the target cargo handling movement corresponding to the operation of the movement changeover switch 52a is performed in the direction corresponding to the tilting direction of the cargo handling controller 52 at the speed corresponding to the tilting angle. When the cargo handling input operation is not performed, the remote CPU 44 sets the cargo handling instruction information so as to stop the cargo handling movement or maintain the stopped state.

Then, the remote CPU 44 generates the remote instruction signal SGa in which the travel instruction information and the cargo handling instruction information are set as described above.

When both the travel input operation and the cargo handling input operation are not performed, the remote CPU 44 generates the remote instruction signal SGa in which the movement stop information for stopping both the traveling movement and the cargo handling movement or maintaining the stopped state is set.

The image receiving unit 48 and the plurality of APs 60a to 60c are communication interfaces that perform wireless communication with the forklift 20 and, for example, realized by at least one of one or more dedicated hardware circuits, and one or more processors (control circuits) that operate according to a computer program (software).

The plurality of APs 60a to 60c are electrically connected to the remote CPU 44 through the hub 47 and the router 46. The plurality of APs 60a to 60c are used to transmit the remote instruction signal SGa generated by the remote CPU 44. Furthermore, the plurality of APs 60a to 60c are used to receive the vehicle signal SGb transmitted from the forklift 20.

Here, as shown in FIG. 2, the plurality of APs 60a to 60c are arranged at positions spaced apart from each other. The plurality of APs 60a to 60c are arranged such that the communication ranges of the adjacent AP partially overlaps with each other. Specifically, the plurality of APs 60a to 60c are arranged spaced apart at intervals shorter than the communication range of each AP 60a to 60c.

Furthermore, FIG. 2 schematically shows the communication range of the plurality of APs 60a to 60c and the forklift 20, and the actual communication range is wide. Moreover, in the present embodiment, three APs 60a to 60c are shown, but the number of APs is not limited to three, and any number of APs may be used.

The image receiving unit 48 receives the image signal SGg transmitted from the forklift 20. The image signal SGg is a signal in which one or more image data are set. In the present embodiment, signal processing is performed on one or more image data set in the image signal SGg. The signal processing is, for example, coding processing for reducing the amount of data. The standard of the coding processing is arbitrary.

The remote image processing unit 49 displays an image on the monitor 41 based on the image data set in the image signal SGg. The remote image processing unit 49 executes a process for displaying an image on the monitor 41 from the image data set in the image signal SGg. For example, the remote image processing unit 49 executes a restoration process of the coded one or more pieces of image data received by the image receiving unit 48, and causes the monitor 41 to display the image restored by the restoration process.

As shown in FIG. 3, the forklift 20 includes a traveling actuator 71, a cargo handling actuator 72, a main wireless unit 80 and a sub wireless unit 90, a vehicle CPU 73, a vehicle memory 74, a vehicle image processing unit 75, and an image transmitting unit 76.

The traveling actuator 71 is a first movement drive unit (specifically, a traveling movement drive unit) that causes the forklift 20 to perform a first movement (specifically, a traveling movement). The traveling actuator 71 rotates the wheels 22 and changes the steering angle (advancing direction).

If the forklift 20 is an engine type, for example, the traveling actuator 71 is a steering device or the like that changes the engine and the steering angle, and if the forklift 20 is an EV type including a power storage device, for example, the traveling actuator 71 is an electric motor and a steering device or the like that rotatably drives the wheels 22.

The cargo handling actuator 72 is a second movement drive unit (specifically, a cargo handling movement drive unit) for performing a second movement (specifically, a cargo handling movement). The cargo handling actuator 72 drives the mast 24 and the fork 25. Specifically, the cargo handling actuator 72 drives the mast 24 and the fork 25 so that the lift movement, the reach movement, and the tilt movement are performed.

The wireless units 80 and 90 and the image transmitting unit 76 are communication interfaces that perform wireless communication with the remote operation device 40, and are realized by, for example, at least one of one or more dedicated hardware circuits and one or more processors (control circuits) operating according to a computer program (software).

In the present embodiment, the main wireless unit 80 and the sub wireless unit 90 are provided separately. Both wireless units 80 and 90 are used to receive the remote instruction signal SGa. Furthermore, in the present embodiment, both wireless units 80 and 90 are used to transmit the vehicle signal SGb indicating various states of the forklift 20.

In the present embodiment, one of the main wireless unit 80 and the sub wireless unit 90 corresponds to the "first wireless unit", and the other corresponds to the "second wireless unit".

The main wireless unit 80 is electrically connected to the vehicle CPU 73 and the sub wireless unit 90, and can exchange signals therewith.

The main wireless unit 80 includes a main wireless module 81 that transmits and receives signals to and from the plurality of APs 60a to 60c, a main wireless microcomputer 82 that controls the main wireless module 81, and a main wireless memory 83. Every time the main wireless module 81 receives the remote instruction signal SGa, the main wireless microcomputer 82 converts the remote instruction signal SGa to a control signal of the in-vehicle communication standard, and outputs the control signal to the vehicle CPU 73.

The information set in the remote instruction signal SGa is set in the control signal, and specifically, travel instruction information and cargo handling instruction information are set. That is, the main wireless microcomputer 82 converts the remote instruction signal SGa of wireless communication format received by the main wireless module 81 to a control signal of an in-vehicle communication format while holding the information set in the remote instruction signal SGa. Although the in-vehicle communication standard is arbitrary, for example, it is the CAN standard, and the control signal is, for example, the CAN signal.

The sub wireless unit 90 is not electrically connected to the vehicle CPU 73, and is configured so as not to directly exchange signals with the vehicle CPU 73. In the present embodiment, the sub wireless unit 90 exchanges signals with the vehicle CPU 73 through the main wireless unit 80.

The sub wireless unit 90 includes a sub wireless module 91 that transmits and receives signals to and from the plurality of APs 60a to 60c, a sub wireless microcomputer 92 that controls the sub wireless module 91, and a sub wireless memory 93. Similar to the main wireless microcomputer 82, the sub wireless microcomputer 92 converts the remote instruction signal SGa to a control signal of the in-vehicle communication standard every time the sub wireless module 91 receives the remote instruction signal SGa, and outputs the control signal to the vehicle CPU 73 through the main wireless unit 80.

The wireless microcomputers 82 and 92 search for the target APs 60m and 60n among the plurality of APs 60a to 60c using the wireless modules 81 and 91, and establishes a communication connection (pairing) with the wireless modules 81 and 91 and the target APs 60m and 60n when the predetermined conditions are satisfied. Thus, the wireless modules 81 and 91 and the target APs 60m and 60n transmit and receive the remote instruction signal SGa and the vehicle signal SGb by packet communication.

That is, the wireless modules 81 and 91 and the target APs 60m, 60n exchange the remote instruction signal SGa and the vehicle signal SGb under a situation where they are communicatively connected to each other.

For the sake of convenience of explanation, in the following description, a state in which the main wireless module 81 (i.e., the main wireless unit 80) and the main target AP 60m are communicatively connected is referred to as a main communication connection state, and a state in which the main wireless module 81 is not communicatively connected is referred to as a main unconnected state.

Similarly, a state in which the sub wireless module 91 (i.e., the sub wireless unit 90) and the sub target AP 60n are communicatively connected is referred to as a sub communication connection state, and a state in which the sub wireless module 91 is not communicatively connected is referred to as a sub unconnected state.

The main wireless unit 80 transmits the control signal as it is to the sub wireless unit 90 when the control signal in which the vehicle information is set is input from the vehicle CPU 73, and converts the control signal to the vehicle signal SGb and transmits the same using the main wireless module 81 when it is in the main communication connection state.

When the control signal in which the vehicle information is set is input from the vehicle CPU 73 through the main wireless unit 80 in a situation where the sub communication connection state is set, the sub wireless microcomputer 92 converts the control signal into the vehicle signal SGb and then transmits the same using the sub wireless module 91.

In the present embodiment, the main wireless module 81, the main target AP 60m, and the main communication connection state may correspond to the "first vehicle communication unit", the "first target remote communication unit", and the "first communication connection state". In this case, the sub wireless module 91, the sub target AP 60n, and the sub communication connection state correspond to the "second vehicle communication unit", the "second target remote communication unit", and the "second communication connection state".

Furthermore, the main wireless module 81, the main target AP 60m, and the main communication connection state may correspond to the "second vehicle communication unit", the "second target remote communication unit", and the "second communication connection state". In this case, the sub wireless module 91, the sub target AP 60n, and the sub communication connection state correspond to the "first vehicle communication unit", the "first target remote communication unit", and the "first communication connection state". That is, one of the main wireless module 81 and the sub wireless module 91 may correspond to the "first vehicle communication unit", and the other may correspond to the "second vehicle communication unit". The same applies to other configurations.

In the present embodiment, the wireless communication format between the wireless modules 81 and 91 and the target APs 60m, 60n is Wi-Fi (in other words, wireless LAN of IEEE 802.11 standard). Wi-Fi has a plurality of standards such as IEEE802.11a and IEEE802.11ac, but the wireless communication format may be any of the above plurality of standards. In this case, the wireless modules 81 and 91 may be general-purpose wireless LAN modules with an antenna.

Furthermore, the wireless communication format between the wireless modules 81 and 91 and the target APs 60m and 60n is not limited to Wi-Fi, and may be arbitrary, for example, Bluetooth (registered trademark) and Zigbee (registered trademark).

Here, the main wireless unit 80 is restricted so that the main wireless module 81 does not communicatively connect with an AP that is different from the main target AP 60m under a situation of the main communication connection state. The same applies to the sub wireless unit 90. That is, in the present embodiment, the AP serving as the communication connection target for the wireless modules 81 and 91 is limited to one.

On the other hand, when the main wireless module 81 is in the main unconnected state, it can communicatively connect with any AP within the communication range of the plurality of APs 60a to 60c. In this case, when the main communication connection state is released and the main wireless module 81 is in the main unconnected state, the main wireless module 81 may again communicatively connect with the AP that was in the communication connection state before the main unconnected state or may communicatively connect with a different AP. For example, when the main communication connection state in which the first AP 60a is selected as the main target AP 60m is released and the main unconnected state is established, the main wireless module 81 may again communicatively connect with the first AP 60a, or may communicatively connect with an AP other than the first AP 60a.

In other words, the communication connection state may refer to a state in which signals (e.g., the remote instruction signal SGa or the vehicle signal SGb) related to remote operation can be exchanged between the wireless module 81 and 91 and the target AP 60m, 60n, while the communicative connection with an AP different from the target APs 60m, 60n is restricted (or prohibited). The unconnected state may refer to a state in which exchanging of signals related to remote operation between the wireless modules 81 and 91 and the plurality of APs 60a to 60c is restricted (or prohibited), while the communicative connection with an AP within the communication range can be established.

The main wireless unit 80 and the sub wireless unit 90 exchange signals for confirming their states. Thus, the wireless units 80 and 90 can grasp each other's state, for example, whether or not they are in the communication connection state, and if they are in the communication connection state, can grasp the APs that are in communicative connection.

The vehicle CPU 73 performs a control related to the movement of the forklift 20 by executing various programs stored in the vehicle memory 74. For example, the vehicle CPU 73 executes the vehicle control program 74a stored in the vehicle memory 74 to drive control the actuators 71 and 72 based on the remote instruction signal SGa received by either one of the wireless modules 81 and 91, specifically, the control signal obtained by converting the remote instruction signal SGa.

For example, the vehicle CPU 73 drive controls the traveling actuator 71 based on the travel instruction information set in the remote instruction signal SGa (specifically, control signal). Thus, the traveling movement corresponding to the traveling remote operation, specifically, the travel input operation is performed.

Similarly, the vehicle CPU 73 drive controls the cargo handling actuator 72 based on the cargo handling instruction information set in the remote instruction signal SGa (specifically, control signal). Thus, the cargo handling remote operation, specifically, the cargo handling movement corresponding to the cargo handling input operation is performed.

From the above, the remote operation device 40 remotely operates the forklift 20. That is, the forklift 20 is remotely operated by the remote instruction signal SGa transmitted from the remote operation device 40. In other words, the vehicle CPU 73 can be said to be a drive control unit that drive controls the forklift 20 so as to be able to perform the movement corresponding to the remote instruction signal SGa received by either of the wireless modules 81 and 91. The vehicle control program 74a can also be said to be a type of industrial vehicle remote operation program that causes the vehicle CPU 73 to function as a drive control unit.

The vehicle CPU 73 may have any specific drive control mode as long as it can drive control the forklift 20 based on the remote instruction signal SGa. Similarly, the specific configuration of the vehicle control program 74a is also arbitrary.

The vehicle CPU 73 periodically executes a process of generating a control signal in which vehicle information, which is information for specifying the traveling condition and the cargo handling movement condition of the forklift 20, is set and outputting the control signal to the main wireless unit 80. As described above, one of the wireless modules 81 and 91 of the wireless units 80 and 90 in the communication connection state converts the control signal into the vehicle signal SGb and transmits the vehicle signal SGb. As a result, the vehicle signal SGb is periodically transmitted from the forklift 20. The remote CPU 44 can grasp the current traveling condition and cargo handling movement condition of the forklift 20 based on the vehicle signal SGb received by any of the plurality of APs 60a to 60c.

The traveling condition of the forklift 20 includes, for example, at least one of traveling speed, acceleration, and steering angle, or the cargo handling movement condition includes, for example, at least one of position in the up-down direction of the fork 25, position in the front-back direction of the mast 24, or tilting angle of the mast 24.

The vehicle image processing unit 75 is electrically connected to the plurality of cameras 31 to 36, and receives all the image data captured by the plurality of cameras 31 to 36.

The vehicle image processing unit 75 generates the image signal SGg in which the image data transmitted from the image transmitting unit 76 to the image receiving unit 48 is set. The vehicle image processing unit 75 of the present embodiment executes signal processing (specifically, coding processing) on a plurality of image data, and the image signal SGg in which the image data is set is output to the image transmitting unit 76.

The image transmitting unit 76 transmits the image signal SGg to the image receiving unit 48. Specifically, the image transmitting unit 76 searches for the registered image receiving unit 48, and establishes communication connection (pairing) with the searched image receiving unit 48. Then, the image transmitting unit 76 periodically transmits the image signal SGg based on the completion of the communication connection with the image receiving unit 48. The latest image (in other words, real-time image) is thereby displayed on the monitor 41.

In the present embodiment, the communication connection between the image transmitting unit 76 and the image receiving unit 48 is independently performed regardless of the communication connection state between the wireless modules 81 and 91 and the target APs 60m and 60n. Therefore, in a situation where one of the plurality of APs 60a to 60c and one of the wireless modules 81 and 91 are in communication connection, the communication connection between the image transmitting unit 76 and the image receiving unit 48 may be released, and vice versa. That is, the transmission/reception of the remote instruction signal SGa and the transmission/reception of the image signal SGg are independently performed.

However, the present invention is not limited thereto, and the communication connection between the image transmitting unit 76 and the image receiving unit 48 and the communication connection between the wireless modules 81 and 91 and the target APs 60m and 60n may be synchronized. For example, the communication connection between the image transmitting unit 76 and the image receiving unit 48 may be established when the main communication connection state or the sub communication connection state is established, and the communication connection between the image transmitting unit 76 and the image receiving unit 48 may be released (disconnected) when both communication connection states are released (disconnected).

The wireless communication format of the image transmitting unit 76 and the image receiving unit 48 may be the same as or different from the wireless communication format between the wireless modules 81 and 91 and the target APs 60m and 60n.

Hereinafter, a configuration related to communication connection between the plurality of APs 60a to 60c and both wireless modules 81 and 91 and a process related to transmission/reception of the remote instruction signal SGa will be described in detail.

As described above, the remote CPU 44 generates the remote instruction signal SGa and outputs the remote instruction signal SGa to each of the plurality of APs 60a to 60c through the router 46 and the hub 47.

If there is a main target AP 60m that is communicatively connected to the main wireless module 81 among the plurality of APs 60a to 60c, that is, if the main communication connection state is established, the main target AP 60m periodically transmits the remote instruction signal SGa to the main wireless module 81. When in the main communication connection state, the main wireless module 81 receives the remote instruction signal SGa transmitted from the main target AP 60m.

Furthermore, if there is a sub target AP 60n that is communicatively connected to the sub wireless module 91 among the plurality of APs 60a to 60c, that is, if the sub communication connection state is established, the sub target AP 60n periodically transmits the remote instruction signal SGa to the sub wireless module 91. When in the sub communication connection state, the sub wireless module 91 receives the remote instruction signal SGa transmitted from the sub target AP 60n.

The step in which the main wireless module 81 receives the remote instruction signal SGa corresponds to the "first receiving step", and the step in which the sub wireless module 91 receives the remote instruction signal SGa corresponds to the "second receiving step". However, the correspondence relationship may be reversed, and the step in which the main wireless module 81 receives the remote instruction signal SGa may correspond to the "second receiving step".

On the other hand, when both target APs 60m and 60n do not exist, that is, when none of the APs 60a to 60c is communicatively connected, the remote instruction signal SGa is not transmitted/received. Here, an AP that is not communicatively connected to neither of the wireless modules 81 and 91 among the plurality of APs 60a to 60c is referred to as an unconnected AP 60x.

The plurality of APs 60a to 60c periodically transmit the beacon signal SGx. The beacon signal SGx is a signal in which information (i.e., identification information) that specifies each of the APs 60a to 60c is set. In the present embodiment, the transmission radio field intensity of the remote instruction signal SGa and the transmission radio field intensity of the beacon signal SGx match.

That is, in the present embodiment, the target APs 60m and 60n transmit the remote instruction signal SGa and the beacon signal SGx to the wireless modules 81 and 91. The unconnected AP 60x does not transmit the remote instruction signal SGa to the wireless modules 81 and 91, but transmits the beacon signal SGx.

In such a configuration, the wireless microcomputers 82 and 92 perform communication control of the wireless modules 81 and 91.

Specifically, the main wireless memory 83 stores a main communication control process program 83a. The main communication control process program 83a is a kind of industrial vehicle remote operation program for remotely operating the forklift 20 using the remote operation device 40, and is specifically a program for executing the main communication control process. The main wireless microcomputer 82 performs the communication control of the main wireless module 81 by executing the main communication control process program 83a.

Similarly, the sub wireless memory 93 stores a sub communication control process program 93a. The sub communication control process program 93a is a kind of industrial vehicle remote operation program for remotely operating the forklift 20 using the remote operation device 40, and is specifically a program for executing the sub communication control process. The sub wireless microcomputer 92 performs the communication control of the sub wireless module 91 by executing the sub communication control process program 93a.

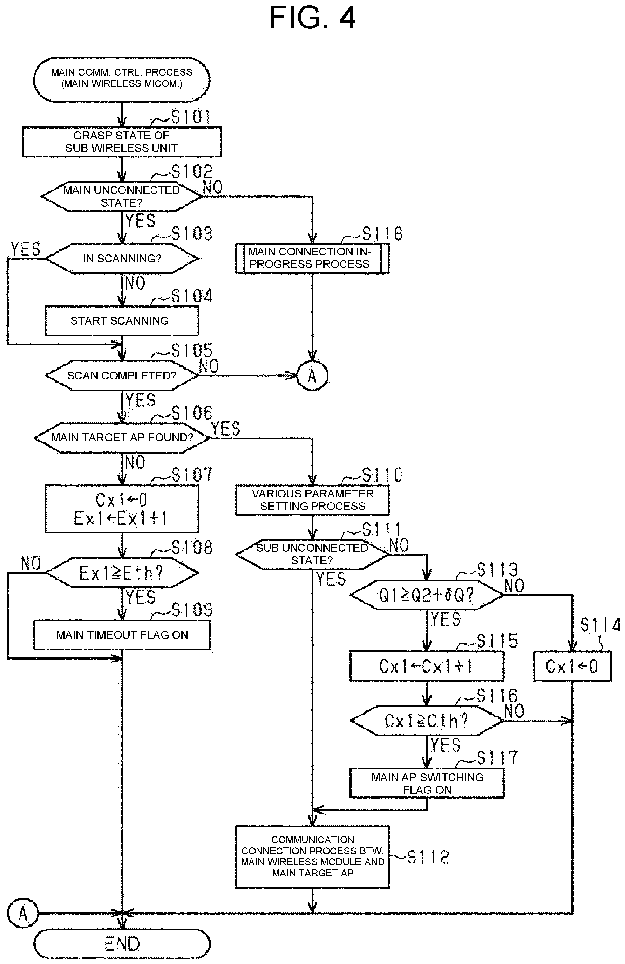

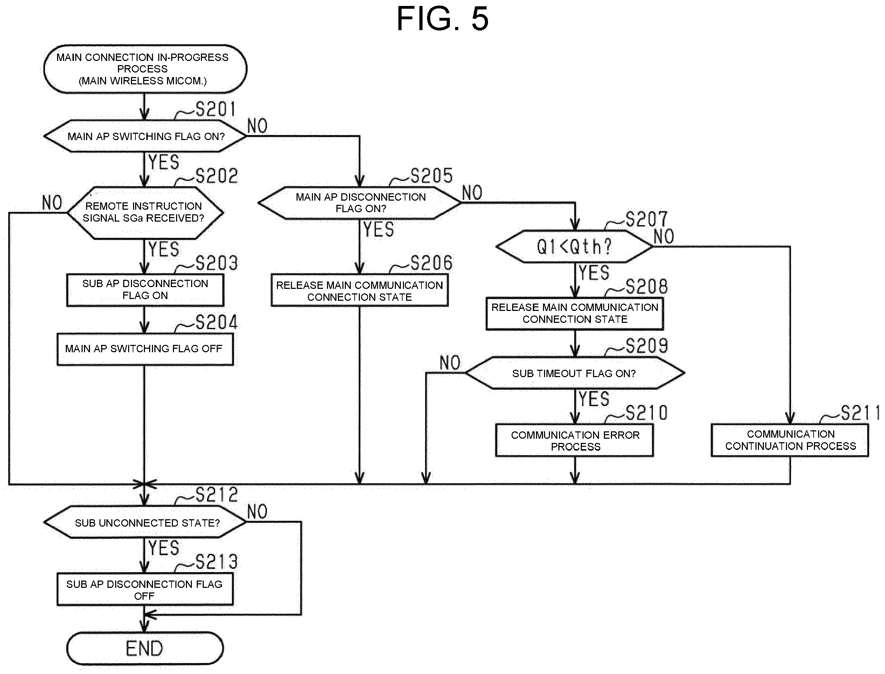

Next, the main communication control process executed by the main communication control process program 83a will be described with reference to FIGS. 4 and 5. The main communication control process is regularly executed.

As shown in FIG. 4, the main wireless microcomputer 82 grasps the state of the sub wireless unit 90 (specifically, the sub wireless module 91) in step S101.

Specifically, the sub wireless unit 90 periodically outputs a sub state signal indicating its own state to the main wireless unit 80. The main wireless microcomputer 82 grasps the state of the sub wireless unit 90 based on the sub state signal input to the main wireless unit 80.

The state of the sub wireless unit 90 in the present embodiment includes a communication state, an abnormal state indicating whether or not an abnormality has occurred, and a sub reception radio wave intensity Q2 which is a reception radio wave intensity of a signal received by the sub wireless module 91. The communication state includes whether or not the sub communication connection state is established, and when the sub communication connection state is established, identification information (e.g., MAC information) of the sub target AP 60n.

Furthermore, when the main AP disconnection flag and the sub timeout flag are set (ON), information regarding these flags is also included in the state of the sub wireless unit 90. Since the sub timeout flag is a type of flag indicating an abnormality, information regarding the sub timeout flag is included in the abnormal state of the sub wireless unit 90. The sub reception radio wave intensity Q2 will be described later.

In the following step S102, the main wireless microcomputer 82 determines whether or not the main unconnected state is set. Specifically, the main wireless microcomputer 82 determines whether or not the main wireless module 81 is in a state of not being communicatively connected.

When in the main unconnected state, the main wireless microcomputer 82 proceeds to step S103, and determines whether or not the main target AP 60m is being scanned (in other words, being searched). If the main wireless microcomputer 82 is not scanning, the main wireless microcomputer 82 proceeds to step S104 and starts scanning (in other words, searching) the main target AP 60m using the main wireless module 81. Specifically, the main wireless microcomputer 82 searches for APs existing within the communication range of the main wireless module 81 by detecting beacon signals SGx transmitted from the plurality of APs 60a to 60c using the main wireless module 81.

When the scan is in progress or after the scan is started, the main wireless microcomputer 82 determines whether or not the scan is completed in step S105. The trigger for determining that the scan is completed is, for example, that a predetermined period has elapsed since the scan was started. However, the trigger for determining that the scan is completed is not limited to this, and may be, for example, that one or more APs are detected.

If the scan is not completed, the main wireless microcomputer 82 terminates the process as it is, while if the scan is completed, the main wireless microcomputer 82 proceeds to step S106, and determines whether or not the main target AP 60m is searched, specifically, whether or not the main target AP 60m is found based on the scan result. The scan result includes, for example, the presence or absence of reception of the beacon signal SGx. Furthermore, when the main wireless module 81 has received the beacon signal SGx, the scan result includes the identification information included in the beacon signal SGx and the reception radio wave intensity of the beacon signal SGx.

In step S106, the main wireless microcomputer 82 determines whether or not the main wireless module 81 has received the beacon signal SGx based on the scan result. When the beacon signal SGx is not received, the main wireless microcomputer 82 determines that the main target AP 60m cannot be found, and makes a negative determination in step S106.

When the main wireless module 81 has received the beacon signal SGx, the main wireless microcomputer 82 specifies the AP transmitting the beacon signal SGx based on the identification information of the beacon signal SGx, and determines whether or not the specified AP is the sub target AP 60n. When not in the sub communication connection state or if in the sub communication connection state but the AP specified this time is not the sub target AP 60n, the main wireless microcomputer 82 sets the AP specified this time as the main target AP 60m. On the other hand, when the AP specified this time is the sub target AP 60n, the main wireless microcomputer 82 determines that the main target AP 60m cannot be found, and makes a negative determination in step S106. That is, the main wireless microcomputer 82 searches for an AP different from the sub target AP 60n as the main target AP 60m.

When the main wireless module 81 receives a plurality of beacon signals SGx, the main wireless microcomputer 82 specifies the plurality of APs that transmitted the plurality of beacon signals SGx, and selects one of the plurality of specified APs as the main target AP 60m.

In the present embodiment, when the AP set as the main target AP 60m in the previous main communication control process is included in the plurality of APs specified this time, the main wireless microcomputer 82 set the relevant AP as the main target AP 60m. That is, when a plurality of APs are found as a result of scanning, the main wireless microcomputer 82 of the present embodiment causes the same AP to be continuously selected as the main target AP 60m.

On the other hand, when the AP set as the main target AP 60m in the previous main communication control process is not included in the plurality of APs specified this time, the main wireless microcomputer 82 selects the AP that transmitted a beacon signal with the largest reception radio wave intensity among the plurality of beacon signals SGx as the main target AP 60m.

When the main wireless microcomputer 82 has not found the main target AP 60m, that is, when it makes a negative determination in step S106, in step S107, the main wireless microcomputer 82 resets the main prescribed period counter Cx1 to "0" and increments the main error counter Ex1. Thereafter, the main wireless microcomputer 82 proceeds to step S108 to determine whether or not the main error counter Ex1 is greater than or equal to an error threshold Eth.

The main error counter Ex1 is a counter for counting a period during which the main target AP 60m cannot be found. The main error counter Ex1 is incremented when the main target AP 60m is not found in one scan. Therefore, it can be said that the determination process of step S108 is a process of determining whether or not the scanning process in which the main target AP 60m was not found has been performed for greater than or equal to the number of times of the error threshold Eth.

When the main error counter Ex1 is less than the error threshold Eth, the main wireless microcomputer 82 terminates the process as it is, whereas when the main error counter Ex1 is greater than or equal to the error threshold Eth, the main wireless microcomputer 82 sets (ON) the main timeout flag in step S109 and terminates the process.

Here, a case where the main error counter Ex1 is greater than or equal to the error threshold Eth means that the main target AP 60m could not be found even though the scan is performed for greater than or equal to the number of times of the error threshold Eth. In other words, a case where the main error counter Ex1 is greater than or equal to the error threshold Eth means that the main target AP 60m could not be found over the error determination period required to perform the scan of greater than or equal to the number of times of the error threshold Eth. Therefore, the main timeout flag can be said to be a flag indicating that the main target AP 60m could not be found over the error determination period.

On the other hand, when the main target AP 60m is found by the scanning process, the main wireless microcomputer 82 makes an affirmative determination in step S106 and proceeds to step S110 to execute the process of setting various parameters.

Specifically, the main wireless microcomputer 82 resets the main error counter Ex1 to "0". This can avoid the main timeout flag from being accidentally set when the main target AP 60m is intermittently found.

Furthermore, the main wireless microcomputer 82 determines whether or not the main target AP 60m found this time is the same as the main target AP 60m found the previous time, and resets the main prescribed period counter Cx1 to "0" when the main target APs 60m are different. If the two are the same, the main wireless microcomputer 82 does not change the main prescribed period counter Cx1.

Here, the main wireless memory 83 is provided with a storage area in which identification information of the main target AP 60m is stored, and when the main wireless microcomputer 82 finds the main target AP 60m, the main wireless microcomputer 82 stores the identification information of the main target AP 60m in the storage area. The main wireless microcomputer 82 thus can specify the main target AP 60m.

Furthermore, the main wireless memory 83 is provided with a storage area for storing one or a plurality of main reception radio wave intensities Q1 which are the reception radio wave intensities of the signals transmitted from the main target AP 60m and received by the main wireless module 81. The main wireless microcomputer 82 stores the main reception radio wave intensity Q1 in the storage area each time a scan result is obtained. Thus, the main wireless microcomputer 82 can grasp the latest or a plurality of main reception radio wave intensities Q1 from the latest to the previous multiple times. Details of the main reception radio wave intensity Q1 will be described later.

When the main timeout flag is set, the main wireless microcomputer 82 erases the main timeout flag in step S110.

In the following step S111, the main wireless microcomputer 82 determines, based on the grasped result of step S101, whether or not in the sub unconnected state, specifically whether or not the sub wireless module 91 is not communicatively connected with the sub target AP 60n.

When in the sub unconnected state, the main wireless microcomputer 82 proceeds to step S112 to communicatively connect the main wireless module 81 and the main target AP 60m, and terminates the present process. Specifically, the main wireless microcomputer 82 authenticates the main target AP 60m as a communication partner of the main wireless module 81, and transmits the authentication signal to the main target AP 60m. Upon receiving the authentication signal, the main target AP 60m authenticates the main wireless module 81 as the communication partner. Thus, it becomes possible to transmit and receive the remote instruction signal SGa and the vehicle signal SGb, which are signals for performing remote operation, rather than the signal for communication connection such as the beacon signal SGx.

When not in the sub unconnected state, that is, when in the sub communication connection state, the main wireless microcomputer 82 performs a main communication determination, which is a determination on whether or not to communicatively connect the main wireless module 81 and the main target AP 60m in steps S113 to S117.

Specifically, in step S113, the main wireless microcomputer 82 determines whether or not the main reception radio wave intensity Q1 is higher than the sub reception radio wave intensity Q2 by greater than or equal to a threshold intensity δQ (Q1 ≥ Q2 + δQ?).

The main reception radio wave intensity Q1 is the reception radio wave intensity of the signal transmitted from the main target AP 60m and received by the main wireless module 81. In the present embodiment, the main reception radio wave intensity Q1 in the main unconnected state is the reception radio wave intensity of the beacon signal SGx, and the main reception radio wave intensity Q1 in the main communication connection state is the reception radio wave intensity of the remote instruction signal SGa.

Similarly, the sub reception radio wave intensity Q2 is the reception radio wave intensity of the signal transmitted from the sub target AP 60n and received by the sub wireless module 91. In the present embodiment, the sub reception radio wave intensity Q2 in the sub unconnected state is the reception radio wave intensity of the beacon signal SGx, and the sub reception radio wave intensity Q2 in the sub communication connection state is the reception radio wave intensity of the remote instruction signal SGa.

Note that step S113 is a process executed when in the main unconnected state and the sub communication connection state. Therefore, the main reception radio wave intensity Q1 in step S113 is the reception radio wave intensity of the beacon signal SGx from the main target AP 60m, and the sub reception radio wave intensity Q2 is the reception radio wave intensity of the remote instruction signal SGa from the sub target AP 60n.

When the main reception radio wave intensity Q1 is less than the additional value of the sub reception radio wave intensity Q2 and the threshold intensity δQ, the main wireless microcomputer 82 resets the main prescribed period counter Cx1 to "0" in step S114 and terminates the process.

On the other hand, when the main reception radio wave intensity Q1 is greater than or equal to the additional value, the main wireless microcomputer 82 proceeds to step S115 to increment the main prescribed period counter Cx1.

Thereafter, in step S116, the main wireless microcomputer 82 determines whether or not the main prescribed period counter Cx1 is greater than or equal to the specified threshold Cth. When the main prescribed period counter Cx1 is less than the specified threshold Cth, the main wireless microcomputer 82 terminates the process as it is. On the other hand, when the main prescribed period counter Cx1 is greater than or equal to the specified threshold Cth, the main wireless microcomputer 82 sets (ON) the main AP switching flag in step S117, and proceeds to step S112 to communicatively connect the main wireless module 81 and the main target AP 60m and terminates the present process.

Here, when the main prescribed period counter Cx1 is greater than or equal to the specified threshold Cth, this means that a state in which the main reception radio wave intensity Q1 is higher than the sub reception radio wave intensity Q2 by greater than or equal to the threshold intensity δQ is continued over a prescribed period Ta required for the scanning for the number of times of the specified threshold Cth to be performed. That is, the main communication determination is a determination on whether or not the state in which the main reception radio wave intensity Q1 is higher than the sub reception radio wave intensity Q2 by greater than or equal to the threshold intensity δQ is continued for the prescribed period Ta.

The prescribed period Ta may be a fixed value or a variable value. For example, the prescribed period Ta has a fixed value when the period required for one scanning process does not change, the prescribed period Ta has a variable value when the period required for one scanning process changes. It should be noted that whether or not the period required for one scanning process changes depends on the conditions that trigger the completion of the scan, and the like. The prescribed period Ta is arbitrary as long as it is longer than the period required for at least two scanning processes.

The main wireless microcomputer 82 resets the main prescribed period counter Cx1 to "0" based on the fact that the main communication connection state is established in step S112.

Furthermore, as described above, the main prescribed period counter Cx1 is reset to "0" in step S110 when the main target AP 60m is not found. Therefore, the determination result of the main communication determination (hereinafter, simply referred to as "main communication determination result") can be avoided from being an affirmative determination even though the main target AP 60m is intermittently found.

A case where the main communication determination result is an affirmative determination means a case where an affirmative determination is made in step S116.

On the other hand, in the present embodiment, a case in which the main communication determination result is a negative determination includes (A) a case in which the main reception radio wave intensity Q1 becomes less than an additional value of the sub reception radio wave intensity Q2 and the threshold intensity δQ before elapse of a prescribed period Ta from the start of the main communication determination.

Furthermore, a case in which the main communication determination result is a negative determination includes (B) a case in which the main target AP 60m that has been the target of the main communication determination is no longer found before the elapse of the prescribed period Ta from the start of the main communication determination.

The case of (B) includes a case in which an AP different from the main target AP 60m that has been the target of the main communication determination in the main communication control process of this time is selected as a new main target AP 60m even though the main communication determination has been performed in the main communication control process up to the previous time. In this case, the main prescribed period counter Cx1 is reset to "0" in step S110.

As already explained, when a plurality of APs are specified as a result of scanning, the AP selected as the main target AP 60m in the previous main communication control process is preferentially selected as the main target AP 60m. In view of this point, it can be said that the main wireless microcomputer 82 is configured to select the AP that is the target of the main communication determination as the main target AP 60m when a plurality of APs are searched by the scan during the main communication determination.

When an affirmative determination is made in step S113 and a negative determination is made in step S116, this means that the main communication determination is in progress. When referring to the main communication determination being in progress, this is a state in which the main reception radio wave intensity Q1 is higher than the sub reception radio wave intensity Q2 by greater than or equal to the threshold intensity δQ but the state has not elapsed for longer or equal to the prescribed period Ta.

According to this configuration, the main target AP 60m is searched in a situation of main unconnected state. When the main target AP 60m is found, whether or not in the sub unconnected state is determined, where if in the sub unconnected state, the main communication connection state is established without performing the main communication determination, and if in the sub communication connected state, the main communication determination is performed. When the main communication determination result is affirmative, the main AP switching flag is set and the main communication connection state is set, whereas when the main communication determination result is negative or the main communication determination is in progress, main unconnected state is maintained.

In the present embodiment, the main communication connection state is set when the sub unconnected state is set even during the main communication determination. That is, the main wireless microcomputer 82 enters the main communication connection state without waiting for the main communication determination result based on the fact that the sub unconnected state is set during the main communication determination.

When a negative determination is made in step S102, that is, when in the main communication connection state, the main wireless microcomputer 82 executes a main connection in-progress process in step S118, and terminates the process. The main connection in-progress process will be described with reference to FIG. 5.

As shown in FIG. 5, the main wireless microcomputer 82 determines in step S201 whether or not the main AP switching flag is set. The main AP switching flag is set in the process of step S117.

When the main AP switching flag is set, the main wireless microcomputer 82 proceeds to step S202 and determines whether or not the main wireless module 81 has received the remote instruction signal SGa.

When the main wireless module 81 has not received the remote instruction signal SGa, the main wireless microcomputer 82 proceeds to step S212. On the other hand, when the main wireless module 81 has received the remote instruction signal SGa, the main wireless microcomputer 82 sets (ON) the sub AP disconnection flag in step S203, erases (OFF) the main AP switching flag in step S204 and proceeds to step S212.

The sub AP disconnection flag is a flag for instructing the sub wireless unit 90 to release the sub communication connection state (specifically, to disconnect the communication connection between the sub wireless module 91 and the sub target AP 60n).

On the other hand, when the main AP switching flag is not set, the main wireless microcomputer 82 makes a negative determination in step S201 and proceeds to step S205 to determine whether or not the main AP disconnection flag is set.

The main AP disconnection flag is a flag that is set when a predetermined condition is satisfied in the sub communication control process. The main AP disconnection flag is a flag for instructing the main wireless unit 80 to release the main communication connection state (specifically, to disconnect the communication connection between the main wireless module 81 and the main target AP 60m).

When the main AP disconnection flag is set, the main wireless microcomputer 82 releases the main communication connection state in step S206 and proceeds to step S212. Specifically, the main wireless microcomputer 82 disconnects the communication connection between the main wireless module 81 and the main target AP 60m. The main wireless module 81 is thereby in the unconnected state.

When the main AP disconnection flag is not set, the main wireless microcomputer 82 makes a negative determination in step S205, and determines whether or not the main reception radio wave intensity Q1 is less than the minimum threshold Qth in step S207.

The main reception radio wave intensity Q1 in step S207 is the reception radio wave intensity of the latest remote instruction signal SGa received by the main wireless module 81. However, this is not the sole case, and for example, the average value of the reception radio wave intensities of the remote instruction signal SGa received over a plurality of times may be adopted as the main reception radio wave intensity Q1 to be compared.

The minimum threshold Qth is, for example, the minimum value of the reception radio wave intensity with which the remote instruction signal SGa can be transmitted and received. However, this is not the sole case, and the minimum threshold Qth is arbitrary.

When the main reception radio wave intensity Q1 is less than the minimum threshold Qth, the main wireless microcomputer 82 proceeds to step S208 to release the main communication connection state. The main wireless module 81 is thereby in the unconnected state.

In the following step S209, the main wireless microcomputer 82 determines whether or not the sub timeout flag is set. The sub timeout flag is set when a state in which the sub wireless module 91 cannot find the sub target AP 60n is continued.

The main wireless microcomputer 82 proceeds to step S212 when the sub timeout flag is not set, and determines that a communication abnormality has occurred when the sub timeout flag is set, executes a communication error process in step S210 and proceeds to step S212.

The communication error process includes, for example, a process of outputting a communication error signal to the vehicle CPU 73. The vehicle CPU 73 drive controls both actuators 71 and 72 so that both the traveling movement and the cargo handling movement stop based on the input of the communication error signal. Furthermore, the vehicle CPU 73 instructs the vehicle image processing unit 75 to make a communication error notification. The vehicle image processing unit 75 generates the vehicle signal SGb set so that the communication error display is performed, and transmits the vehicle signal SGb using the image transmitting unit 76. Thus, a communication error display is displayed on the monitor 41.

The communication error notification is not limited to the configuration performed by the monitor 41 and may be arbitrary, and may be sound or the like, or a configuration in which both controllers 51 and 52 are locked so as not to tilt. Moreover, the specific content of the communication error process is not limited to the above and is arbitrary.

On the other hand, when the main reception radio wave intensity Q1 is greater than or equal to the minimum threshold Qth, the main wireless microcomputer 82 proceeds to step S211, continues the main communication connection state, and proceeds to step S212.

In step S212, the main wireless microcomputer 82 determines whether or not in the sub unconnected state based on the grasped result in step S101. When not in the sub unconnected state, that is, when in the sub communication connection state, the main wireless microcomputer 82 terminates the main connection in-progress process as it is, and when in the sub unconnected state, the main wireless microcomputer 82 erases the sub AP disconnection flag in step S213 and terminates the main connection in-progress process.

With this configuration, the main AP switching flag is set and the main communication connection state is set based on the main communication determination result being an affirmative determination in a situation of the sub communication connection state. Thereafter, when the main wireless module 81 receives the remote instruction signal SGa, the sub AP disconnection flag is set. The sub AP disconnection flag is erased when the sub unconnected state is established.

On the other hand, when the main AP disconnection flag is set during the main communication connection state or when the main reception radio wave intensity Q1 is less than the minimum threshold Qth, the main communication connection state is released. In particular, when the main communication connection state is released in a situation where the sub timeout flag is set, communication error process is executed assuming there is a communication abnormality, and the movement of the forklift 20 is forcibly stopped.

Although the details will be described later, the main AP disconnection flag is a flag that is set based on the fact that the sub communication determination result is an affirmative determination and the sub wireless module 91 has normally received the remote instruction signal SGa. Therefore, the situation in which the main AP disconnection flag is set does not correspond to the situation in which the sub target AP 60n has not been found (searched) in the sub communication connection state.

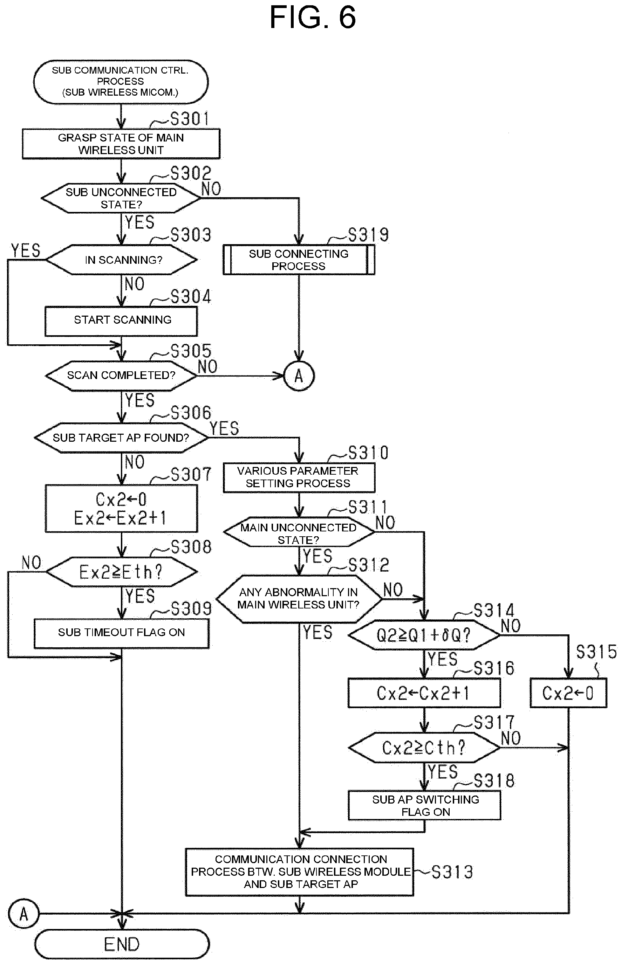

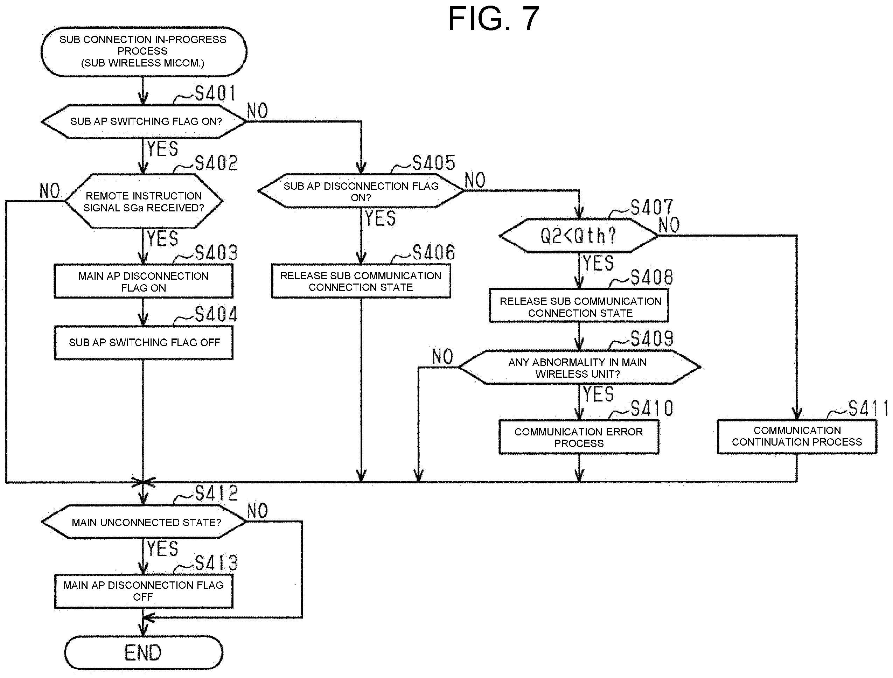

Next, the sub communication control process executed by the sub communication control process program 93a will be described with reference to FIGS. 6 and 7. The sub communication control process is regularly executed. As shown in FIG. 6, the sub wireless microcomputer 92 grasps the state of the main wireless unit 80 (specifically, the main wireless module 81) in step S301.

Specifically, the main wireless unit 80 periodically outputs a main state signal indicating its own state to the sub wireless unit 90. The sub wireless microcomputer 92 grasps the state of the main wireless unit 80 based on the main state signal input to the sub wireless unit 90.

The state of the main wireless unit 80 in the present embodiment includes a communication state, an abnormal state indicating whether or not an abnormality has occurred, and a main reception radio wave intensity Q1. The communication state includes whether or not in the main communication connection state, and when in the main communication connection state, identification information (e.g., MAC information) of the main target AP 60m.

Furthermore, when the sub AP disconnection flag and the main timeout flag are set (ON), information regarding these flags is also included in the state of the main wireless unit 80. Since the main timeout flag is a type of flag indicating an abnormality, information regarding the main timeout flag is included in the abnormal state of the main wireless unit 80.

In the following step S302, the sub wireless microcomputer 92 determines whether or not in the sub unconnected state. Specifically, the sub wireless microcomputer 92 determines whether or not the sub wireless module 91 is in a state of no communication connection.

When in the sub unconnected state, the sub wireless microcomputer 92 proceeds to step S303 and determines whether the sub target AP 60n is being scanned (in other words, being searched).

If the sub wireless microcomputer 92 is not scanning, the sub wireless microcomputer 92 proceeds to step S304 and starts scanning (in other words, searching) the sub target AP 60n using the sub wireless module 91. Specifically, the sub wireless microcomputer 92 searches for APs existing within the communication range of the sub wireless module 91 by detecting beacon signals SGx transmitted from the plurality of APs 60a to 60c using the sub wireless module 91.

When the scan is in progress or after the scan is started, the sub wireless microcomputer 92 determines whether or not the scan is completed in step S305. The trigger for determining that the scan is completed is, for example, that a predetermined period has elapsed since the scan was started. However, the trigger for determining that the scan is completed is not limited to this, and may be, for example, that one or more APs are detected.

If the scan is not completed, the sub wireless microcomputer 92 terminates the process as it is, while if the scan is completed, the sub wireless microcomputer 92 proceeds to step S306, and determines whether or not the sub target AP 60n is searched, specifically, whether or not the sub target AP 60n is found based on the scan result. The scan result includes, for example, the presence or absence of reception of the beacon signal SGx. Furthermore, when the sub wireless module 91 has received the beacon signal SGx, the scan result includes the identification information included in the beacon signal SGx and the reception radio wave intensity of the beacon signal SGx.

In step S306, the sub wireless microcomputer 92 determines whether or not the sub wireless module 91 has received the beacon signal SGx based on the scan result. When the beacon signal SGx is not received, the sub wireless microcomputer 92 determines that the sub target AP 60n cannot be found, and makes a negative determination in step S306.

When the sub wireless module 91 has received the beacon signal SGx, the sub wireless microcomputer 92 specifies the AP transmitting the beacon signal SGx based on the identification information of the beacon signal SGx, and determines whether or not the specified AP is the main target AP 60m. When not in the main communication connection state or if in the main communication connection state but the AP specified this time is not the main target AP 60m, the sub wireless microcomputer 92 sets the AP specified this time as the sub target AP 60n. On the other hand, when the AP specified this time is only the main target AP 60m, the sub wireless microcomputer 92 determines that the sub target AP 60n cannot be found, and makes a negative determination in step S306. That is, the sub wireless microcomputer 92 searches for an AP different from the main target AP 60m as the sub target AP 60n.

When the sub wireless module 91 receives a plurality of beacon signals SGx, the sub wireless microcomputer 92 specifies the plurality of APs that transmitted the plurality of beacon signals SGx, and selects one of the plurality of specified APs as the sub target AP 60n.

In the present embodiment, when the AP set as the sub target AP 60n in the previous sub communication control process is included in the plurality of APs specified this time, the sub wireless microcomputer 92 set the relevant AP as the sub target AP 60n. That is, when a plurality of APs are found as a result of scanning, the sub wireless microcomputer 92 of the present embodiment causes the same AP to be continuously selected as the sub target AP 60n.

On the other hand, when the AP set as the sub target AP 60n in the previous sub communication control process is not included in the plurality of APs specified this time, the sub wireless microcomputer 92 selects the AP that transmitted a beacon signal with the largest reception radio wave intensity among the plurality of beacon signals SGx as the sub target AP 60n.

When the sub wireless microcomputer 92 has not found the sub target AP 60n, that is, when it makes a negative determination in step S306, the sub wireless microcomputer 92 proceeds to step S307, resets the sub prescribed period counter Cx2 to "0" and increments the sub error counter Ex2. Thereafter, the sub wireless microcomputer 92 proceeds to step S308 to determine whether or not the sub error counter Ex2 is greater than or equal to an error threshold Eth.

The sub error counter Ex2 is a counter for counting a period during which the sub target AP 60n cannot be found. The sub error counter Ex2 is incremented when the sub target AP 60n is not found in one scan. Therefore, it can be said that the determination process of step S308 is a process of determining whether or not the scanning process in which the sub target AP 60n was not found has been performed for greater than or equal to the number of times of the error threshold Eth.

When the sub error counter Ex2 is less than the error threshold Eth, the sub wireless microcomputer 92 terminates the process as it is, whereas when the sub error counter Ex2 is greater than or equal to the error threshold Eth, the sub wireless microcomputer 92 sets (ON) the sub timeout flag in step S309 and terminates the process.

Here, a case where the sub error counter Ex2 is greater than or equal to the error threshold Eth means that the sub target AP 60n cannot be found even though the scan is performed for greater than or equal to the number of times of the error threshold Eth. In other words, a case where the sub error counter Ex2 is greater than or equal to the error threshold Eth means that the sub target AP 60n could not be found over the error determination period required to perform the scan of greater than or equal to the number of times of the error threshold Eth. Therefore, the sub timeout flag can be said to be a flag indicating that the sub target AP 60n could not be found over the error determination period.

On the other hand, when the sub target AP 60n is found by the scanning process, the sub wireless microcomputer 92 makes an affirmative determination in step S306, proceeds to step S310, and executes the process of setting various parameters.

Specifically, the sub wireless microcomputer 92 resets the sub error counter Ex2 to "0". This can avoid the sub timeout flag from being accidentally set when the sub target AP 60n is intermittently found.

Furthermore, the sub wireless microcomputer 92 determines whether or not the main target AP 60n found this time is the same as the sub target AP 60n found the previous time, and resets the sub prescribed period counter Cx2 to "0" when the sub target APs 60n are different. If the two are the same, the sub wireless microcomputer 92 does not change the sub prescribed period counter Cx2.

Here, the sub wireless memory 93 is provided with a storage area in which identification information of the sub target AP 60n is stored, and when the sub wireless microcomputer 92 finds the sub target AP 60n, the sub wireless microcomputer 92 stores the identification information of the sub target AP 60n in the storage area. The sub wireless microcomputer 92 thus can specify the sub target AP 60n.

Furthermore, the sub wireless memory 93 is provided with a storage area for storing one or a plurality of sub reception radio wave intensities Q2, and the sub wireless microcomputer 92 stores the sub reception radio wave intensity Q2 in the storage area each time a scan result is obtained. Thus, the sub wireless microcomputer 92 can grasp the latest or a plurality of sub reception radio wave intensities Q2 from the latest to the previous multiple times.

When the sub timeout flag is set, the sub wireless microcomputer 92 erases the sub timeout flag in step S310.

In the following step S311, the sub wireless microcomputer 92 determines, based on the grasped result of step S301, whether or not in the main unconnected state, specifically whether or not the main wireless module 81 is not communicatively connected with the main target AP 60m.

When in the main unconnected state, the sub wireless microcomputer 92 proceeds to step S312 and determines whether or not an abnormality has occurred in the main wireless unit 80 based on the grasped result of step S301.

The abnormality of the main wireless unit 80 is arbitrary, but may include, for example, an abnormality of a component forming the main wireless unit 80 or a setting of a main timeout flag.

If an abnormality has occurred in the main wireless unit 80, the sub wireless microcomputer 92 proceeds to step S313 to communicatively connect the sub wireless module 91 and the sub target AP 60n, and terminates the process.

Specifically, the sub wireless microcomputer 92 authenticates the sub target AP 60n as a communication partner of the sub wireless module 91, and transmits the authentication signal to the sub target AP 60n. Upon receiving the authentication signal, the sub target AP 60n authenticates the sub wireless module 91 as the communication partner. Thus, it becomes possible to transmit and receive the remote instruction signal SGa and the vehicle signal SGb, which are signals for performing remote operation, rather than the signal for communication connection such as the beacon signal SGx.

When not in the main unconnected state, that is, when in the main communication connection state, or when an abnormality has not occurred in the main wireless unit 80 although in the main unconnected state, the sub wireless microcomputer 92 performs a sub communication determination which is a determination on whether or not to communicatively connect the sub wireless module 91 and the sub target AP 60n in steps S314 to S318.

Specifically, in step S314, the sub wireless microcomputer 92 determines whether or not the sub reception radio wave intensity Q2 is higher than the main reception radio wave intensity Q1 by greater than or equal to a threshold intensity δQ (Q2 ≥ Q1 + δQ?). In the present embodiment, the threshold intensity δQ used in step S314 and the threshold intensity δQ used in step S113 are the same.

It should be noted that step S314 when abnormality has not occurred in the main wireless unit 80 is a process executed when in the sub unconnected state and in the main communication connection state. Therefore, the sub reception radio wave intensity Q2 in step S314 is the reception radio wave intensity of the beacon signal SGx from the sub target AP 60n, and the main reception radio wave intensity Q1 is the reception radio wave intensity of the remote instruction signal SGa from the main target AP 60m.

When the sub reception radio wave intensity Q2 is less than the additional value of the main reception radio wave intensity Q1 and the threshold intensity δQ, the sub wireless microcomputer 92 resets the sub prescribed period counter Cx2 to "0" in step S315 and terminates the process.

On the other hand, the sub wireless microcomputer 92 proceeds to step S316 when the sub reception radio wave intensity Q2 is greater than or equal to the additional value, and increments the sub prescribed period counter Cx2.

Thereafter, in step S317, the sub wireless microcomputer 92 determines whether or not the sub prescribed period counter Cx2 is greater than or equal to the specified threshold Cth. When the sub prescribed period counter Cx2 is less than the specified threshold Cth, the sub wireless microcomputer 92 terminates the process as it is. On the other hand, when the sub prescribed period counter Cx2 is greater than or equal to the specified threshold Cth, the sub wireless microcomputer 92 sets (ON) the sub AP switching flag in step S318, proceeds to step S313 to communicatively connect the sub wireless module 91 and the sub target AP 60n, and terminates the process. In the present embodiment, the specified threshold Cth used in step S317 and the specified threshold Cth used in step S116 are the same.

Here, when the sub prescribed period counter Cx2 is greater than or equal to the specified threshold Cth, this means that a state in which the sub reception radio wave intensity Q2 is higher than the main reception radio wave intensity Q1 by greater than or equal to the threshold intensity δQ is continued over a prescribed period Ta required for the scanning for the number of times of the specified threshold Cth to be performed. That is, the sub communication determination is a determination on whether or not the state in which the sub reception radio wave intensity Q2 is higher than the main reception radio wave intensity Q1 by greater than or equal to the threshold intensity δQ is continued over the prescribed period Ta.

The sub wireless microcomputer 92 resets the sub prescribed period counter Cx2 to "0" based on the fact that the sub communication connection state is established in step S313.

Furthermore, as described above, the sub prescribed period counter Cx2 is reset to "0" in step S310 when the sub target AP 60n is not found. Therefore, the determination result of the sub communication determination (hereinafter, simply referred to as "sub communication determination result") can be avoided from being an affirmative determination even though the sub targetAP 60n is intermittently found.

A case where the sub communication determination result is an affirmative determination means a case where an affirmative determination is made in step S317.

On the other hand, in the present embodiment, a case in which the sub communication determination result is a negative determination includes (C) a case in which the sub reception radio wave intensity Q2 becomes less than an additional value of the main reception radio wave intensity Q1 and the threshold intensity δQ before elapse of a prescribed period Ta from the start of the sub communication determination.

Furthermore, a case in which the sub communication determination result is a negative determination includes (D) a case in which the sub target AP 60n that has been the target of the sub communication determination is no longer found before the elapse of the prescribed period Ta from the start of the sub communication determination.

The case of (D) includes a case in which an AP different from the sub target AP 60n that has been the target of the sub communication determination in the sub communication control process of this time is selected as a new sub target AP 60n even though the sub communication determination has been performed in the sub communication control process up to the previous time. In this case, the sub prescribed period counter Cx2 is reset to "0" in step S310.

As already explained, when a plurality of APs are specified as a result of scanning, the AP selected as the sub target AP 60n in the previous sub communication control process is preferentially selected as the sub target AP 60n. In view of this point, it can be said that the sub wireless microcomputer 92 is configured to select the AP that is the target of the sub communication determination as the sub target AP 60n when a plurality of APs are searched by the scan during the sub communication determination.

When an affirmative determination is made in step S314 and a negative determination is made in step S317, this means that the sub communication determination is in progress. When referring to the sub communication determination being in progress, this is a state in which the sub reception radio wave intensity Q2 is higher than the main reception radio wave intensity Q1 by greater than or equal to the threshold intensity δQ but the state has not elapsed for longer or equal to the prescribed period Ta.

According to this configuration, the sub target AP 60n is searched in a situation of the sub unconnected state. When the sub target AP 60n is found, whether or not in the main unconnected state is determined. When in the main unconnected state and the main wireless unit 80 has abnormality, the sub communication connection state is set without the sub communication determination being performed.

On the other hand, when in the main communication connection state or when in the main unconnected state but the main wireless unit 80 does not have abnormality, the sub communication determination is performed. When the sub communication determination result is affirmative, the sub AP switching flag is set and the sub communication connection state is set, whereas when the sub communication determination result is negative or the sub communication determination is in progress, sub unconnected state is maintained.

In the present embodiment, the sub wireless microcomputer 92 sets the sub communication connection state without waiting for the sub communication determination result when in the main unconnected state and abnormality has occurred in the main wireless unit 80 even if the sub communication determination is being performed.

When a negative determination is made in step S302, that is, when in the sub communication connection state, the sub wireless microcomputer 92 executes a sub connection in-progress process in step S319, and terminates the process. The sub connection in-progress process will be described with reference to FIG. 7.

As shown in FIG. 7, the sub wireless microcomputer 92 determines in step S401 whether or not the sub AP switching flag is set. The sub AP switching flag is set in the process of step S318.

When the sub AP switching flag is set, the sub wireless microcomputer 92 proceeds to step S402 and determines whether or not the sub wireless module 91 has received the remote instruction signal SGa.

When the sub wireless module 91 has not received the remote instruction signal SGa, the sub wireless microcomputer 92 proceeds to step S412. On the other hand, when the sub wireless module 91 has received the remote instruction signal SGa, the sub wireless microcomputer 92 sets (ON) the main AP disconnection flag in step S403, erases (OFF) the sub AP switching flag in step S404 and proceed to step S412.

As described above, the main AP disconnection flag is a flag for instructing the main wireless unit 80 to release the main communication connection state, and specifically, is a flag that triggers the execution of the process of step S206.

On the other hand, when the sub AP switching flag is not set, the sub wireless microcomputer 92 makes a negative determination in step S401 and proceeds to step S405 to determine whether or not the sub AP disconnection flag is set.

As described above, the sub AP disconnection flag is a flag for instructing the sub wireless unit 90 to release the sub communication connection state, and is set in step S203 in the present embodiment.

When the sub AP disconnection flag is set, the sub wireless microcomputer 92 releases the sub communication connection state in step S406 and proceeds to step S412. Specifically, the sub wireless microcomputer 92 disconnects the communication connection between the sub wireless module 91 and the sub target AP 60n. The sub wireless module 91 is thereby in the unconnected state.

When the sub AP disconnection flag is not set, the sub wireless microcomputer 92 makes a negative determination in step S405, and determines whether or not the sub reception radio wave intensity Q2 is less than the minimum threshold Qth in step S407.

The sub reception radio wave intensity Q2 in step S407 is the reception radio wave intensity of the latest remote instruction signal SGa received by the sub wireless module 91. However, this is not the sole case, and for example, the average value of the reception radio wave intensities of the remote instruction signal SGa received over a plurality of times may be adopted as the sub reception radio wave intensity Q2 to be compared.

The minimum threshold Qth is, for example, the minimum value of the reception radio wave intensity with which the remote instruction signal SGa can be transmitted and received. However, this is not the sole case, and the minimum threshold Qth is arbitrary.

When the sub reception radio wave intensity Q2 is less than the minimum threshold Qth, the sub wireless microcomputer 92 proceeds to step S408 to release the sub communication connection state. The sub wireless module 91 is thereby in the unconnected state.

In the following step S409, the sub wireless microcomputer 92 determines whether or not an abnormality has occurred in the main wireless unit 80. The abnormality of the main wireless unit 80 includes a case where the main timeout flag is set.

When an abnormality has occurred in the main wireless unit 80, the sub wireless microcomputer 92 determines that a communication abnormality has occurred, executes communication error process in step S410, and proceeds to step S412.

The communication error process includes, for example, a process of outputting a communication error signal to the vehicle CPU 73 through the main wireless unit 80. The vehicle CPU 73 drive controls both actuators 71 and 72 so that both the traveling movement and the cargo handling movement stop based on the input of the communication error signal. However, the specific content of the communication error processing is arbitrary.

On the other hand, when the sub reception radio wave intensity Q2 is greater than or equal to the minimum threshold Qth, the sub wireless microcomputer 92 proceeds to step S411, continues the sub communication connection state, and proceeds to step S412.

In step S412, the sub wireless microcomputer 92 determines whether or not in the main unconnected state based on the grasped result in step S301. When not in the main unconnected state, that is, when in the main communication connection state, the sub wireless microcomputer 92 terminates the sub connection in-progress process as it is, and when in the main unconnected state, the sub wireless microcomputer 92 erases the main AP disconnection flag in step S413 and terminates the sub connection in-progress process.

With this configuration, the sub AP switching flag is set and the sub communication connection state is set based on the sub communication determination result being an affirmative determination in a situation of the main communication connection state. Thereafter, when the sub wireless module 91 receives the remote instruction signal SGa, the main AP disconnection flag is set. The main AP disconnection flag is erased when the main unconnected state is established.

On the other hand, when the sub AP disconnection flag is set during the sub communication connection state or when the sub reception radio wave intensity Q2 is less than the minimum threshold Qth, the sub communication connection state is released. In particular, when the sub communication connection state is released in a situation where an abnormality has occurred in the main wireless unit 80, the communication error process is executed and the movement of the forklift 20 is forcibly stopped.

As described above, the sub AP disconnection flag is a flag that is set when the main communication determination result is affirmative and the main wireless module 81 has normally received the remote instruction signal SGa. Therefore, the situation where the sub AP disconnection flag is set does not correspond to the situation where the main communication connection state is set and the main target AP 60m is not found (searched).

Note that the industrial vehicle remote operation system 10 of the present embodiment, stops the traveling movement and the cargo handling movement of the forklift 20 to release the one that is currently in the communication connection state when the terminating condition of the remote operation is satisfied. However, this is not the sole case, and a configuration in which the communication connection state is maintained even after the terminating condition of the remote operation is satisfied may be adopted.

Although the terminating condition of the remote operation is arbitrary, for example, the terminating operation is performed on the remote operation device, and the terminating operation may be, for example, operation of an end button provided on the remote operation device.

In the present embodiment, the processes of steps S103 to S106 or steps S303 to S306 correspond to the "searching step", and the wireless microcomputers 82 and 92 that execute these processes correspond to the "searching unit". In particular, the processes of steps S103 to S105 or steps S303 to S305 correspond to the "searching process".

The processes of steps S113 to S116 or steps S314 to S317 correspond to the "determination step", and the wireless microcomputers 82 and 92 that execute these processes correspond to the "determination unit". The process of step S112 based on the affirmative determination of step S116 or the process of step S313 based on the affirmative determination of step S317 corresponds to the "communication connection step", and the wireless microcomputers 82 and 92 that execute the process correspond to the "communication connection unit".

The main wireless microcomputer 82 that executes the process of step S112 based on the affirmative determination of step S111 during the main communication determination (in other words, under the situation where the main prescribed period counter Cx1 is not "0") corresponds to the "preceding communication connection unit".

The process of step S206 or step S406 corresponds to the "connection release step", and the wireless microcomputers 82 and 92 that execute the process of step S206 or step S406 correspond to the "connection release unit". Furthermore, the wireless microcomputers 82 and 92 that execute the process of step S210 or step S410 correspond to the "communication abnormality determination unit".

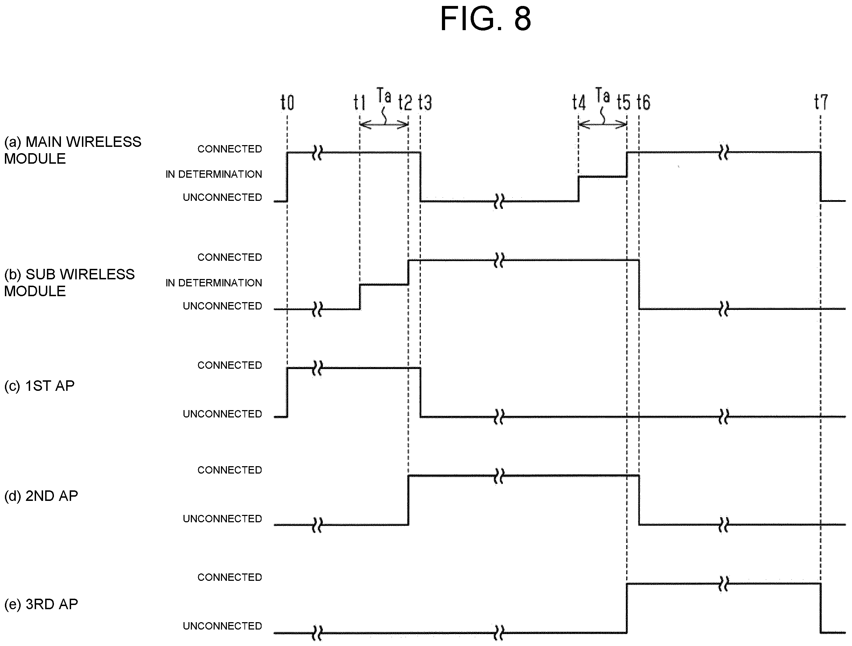

Next, the operation of the present embodiment will be described with reference to FIGS. 2 and 8. FIG. 8 is a time chart showing the state of both wireless modules 81 and 91 and APs 60a to 60c when the forklift 20 is moved as indicated by the arrow in FIG. 2. FIG. 8 at (a) shows the state change of the main wireless module 81, FIG. 8 at (b) shows the state change of the sub wireless module 91, FIG. 8 at (c) shows the state change of the first AP 60a, FIG. 8 at (d) shows the state change of the second AP 60b, and FIG. 8 at (e) shows the state change of the third AP 60c. Note that, for the sake of convenience of illustration, in FIG. 8, the intervals between the timings t0 to t7 are shown differently from the actual intervals.

As shown in FIGS. 2 and 8, it is assumed that the forklift 20 starts moving from a position within the communication range of the first AP 60a at timing t0. In this case, the main wireless module 81 is communicatively connected with the first AP 60a as the main target AP 60m. Thus, the remote instruction signal SGa is transmitted and received between the first AP 60a and the main wireless module 81, and the remote instruction signal SGa is used to remotely operate the forklift 20, in the present embodiment, the traveling movement in the direction of the arrow in the present embodiment. The sub wireless module 91 is in the unconnected state.

As shown in FIG. 2, when the forklift 20 enters the communication range of the second AP 60b at timing t1, the sub wireless module 91 receives the beacon signal SGx of the second AP 60b. Thus, as shown in FIG. 8 at (b), the sub communication determination in which the second AP 60b is the sub target AP 60n is started.

Thereafter, as shown in FIG. 8 at (b) and FIG. 8 at (d), at timing t2, the communication connection between the sub wireless module 91 and the second AP 60b is performed by obtaining the affirmative sub communication determination result. The transmission and reception of the remote instruction signal SGa is thereby started between the second AP 60b and the sub wireless module 91.

As shown in FIG. 8 at (a) and FIG. 8 at (c), at timing t3, when the sub wireless module 91 normally receives the remote instruction signal SGa, the main AP disconnection flag is set, and the main communication connection state is released. Even in this case, since the remote instruction signal SGa is transmitted and received between the second AP 60b and the sub wireless module 91, the remote operation of the forklift 20 is continued without forming a period in which the remote instruction signal SGa is not transmitted and received.

Thereafter, as shown in FIG. 2, when the forklift 20 moves and the forklift 20 enters the communication range of the third AP 60c at timing t4, the main wireless module 81 receives the beacon signal SGx of the third AP 60c. Thus, as shown in FIG. 8 at (a), the main communication determination in which the third AP 60c is the main target AP 60m is started.

As shown in FIG. 8 a t(a) and FIG. 8 at (e), at timing t5, the communication connection between the main wireless module 81 and the third AP 60c is performed by obtaining an affirmative main communication determination result. The transmission and reception of the remote instruction signal SGa is thereby started between the third AP 60c and the main wireless module 81.

As shown in FIG. 8 at (b) and FIG. 8 at (d), at the following timing t6, when the main wireless module 81 normally receives the remote instruction signal SGa, the sub AP disconnection flag is set, and the sub communication connection state is released. Even in this case, since the remote instruction signal SGa is transmitted and received between the third AP 60c and the main wireless module 81, the remote operation of the forklift 20 is continued without forming a period in which the remote instruction signal SGa is not transmitted and received.

Then, as shown in FIG. 8 at (a) and FIG. 8 at (e), at timing t7, when the terminating condition of the remote operation is satisfied, the first communication connection state currently in the communication connection state is released. Thus, both wireless modules 81 and 91 are in the unconnected state.

The present embodiment described in detail above has the following effects. For the sake of convenience of explanation, the sub wireless unit 90 (sub wireless module 91) in a situation of the main communication connection state will be mainly described, but the main wireless unit 80 (main wireless module 81) in a situation of sub communication connection state also has the same effect.

(1-1) The industrial vehicle remote operation system 10 includes a forklift 20 and a remote operation device 40. The forklift 20 includes a main wireless module 81 and a sub wireless module 91. The remote operation device 40 includes a plurality of APs 60a to 60c arranged spaced apart from each other, and remotely operates the forklift 20 by transmitting the remote instruction signal SGa instructing the remote operation using at least one of the APs 60a to 60c.

The main wireless module 81 receives the remote instruction signal SGa from the main target AP 60m when in the main communication connection state in which the main wireless module 81 is communicatively connected to the main target AP 60m among the plurality of APs 60a to 60c.

The sub wireless microcomputer 92 of the sub wireless unit 90 uses the sub wireless module 91 to search for a sub target AP 60n different from the main target AP 60m among the plurality of APs 60a to 60c. The sub wireless microcomputer 92 performs a sub communication determination of determining whether or not to communicatively connect the sub wireless module 91 and the sub target AP 60n based on the sub reception radio wave intensity Q2 in a situation of the main communication connection state in which the main wireless module 81 and the main target AP 60m are communicatively connected (steps S314 to S317). The sub reception radio wave intensity Q2 is the reception radio wave intensity of the beacon signal SGx received by the sub wireless module 91. Then, the sub wireless microcomputer 92 communicatively connects the sub wireless module 91 and the sub target AP 60n based on the affirmative determination of the sub communication determination (step S313). Then, when in the sub communication connection state in which the sub wireless module 91 is communicatively connected to the sub target AP 60n, the sub wireless module 91 receives the remote instruction signal SGa from the sub target AP 60n. The main wireless microcomputer 82 releases the main communication connection state based on the fact that the sub wireless module 91 has received the remote instruction signal SGa from the sub target AP 60n in the main communication connection state (step S206).

According to this configuration, when in the main communication connection state, the remote instruction signal SGa transmitted from the main target AP 60m is received by the main wireless module 81. The remote operation of the forklift 20 thus can be performed.

In a situation of the main communication connection state, the sub wireless module 91 is used to search for the sub target AP 60n, and the sub communication determination is performed. Then, when the sub communication determination result is affirmative, the sub communication connection state in which the sub wireless module 91 and the sub target AP 60n are communicatively connected is established, and the remote instruction signal SGa transmitted from the sub target AP 60n is received by the sub wireless module 91. Therefore, even if the forklift 20 moves to move from the communication range of the main target AP 60m to the communication range of the sub target AP 60n, the remote operation of the forklift 20 can be continuously performed.

On the other hand, the main communication connection state is released based on the fact that the sub wireless module 91 has received the remote instruction signal SGa. Thus, the main wireless module 81 can communicatively connect with any of the plurality of APs 60a to 60c. As a result, if the forklift 20 moves into the communication range of an AP that is communicatively connectable by moving, the main wireless module 81 can transmit and receive the remote instruction signal SGa by communicatively connecting the relevantAP as the main targetAP 60m.

Therefore, even if the forklift 20 moves so as to cross the communication range of the plurality of APs 60a to 60c, the remote operation of the forklift 20 can be continuously performed while suppressing the dead time in which the remote instruction signal SGa is not transmitted and received, so that the traveling range of the forklift 20 can be expanded.

(1-2) In the sub communication determination, it is determined whether or not a state in which the sub reception radio wave intensity Q2 is higher than the main reception radio wave intensity Q1 by greater than or equal to the threshold intensity δQ is continued over a prescribed period Ta. The main reception radio wave intensity Q1 is the reception radio wave intensity of the remote instruction signal SGa transmitted from the main target AP 60m and received by the main wireless module 81.

According to this configuration, when the sub communication determination result is affirmative, specifically, based on the fact that the state in which the sub reception radio wave intensity Q2 is higher than the main reception radio wave intensity Q1 by greater than or equal to the threshold intensity δQ is continued over the prescribed period Ta, the sub target AP 60n and the sub wireless module 91 are communicatively connected. Thus, even if the sub reception radio wave intensity Q2 momentarily becomes higher than the main reception radio wave intensity Q1 by greater than or equal to the threshold intensity δQ, the sub target AP 60n and the sub wireless module 91 are not communicatively connected immediately, and therefore the communication connection based on erroneous determination can be suppressed.

In particular, since the reception radio wave intensities Q1 and Q2 vary depending on the environment in which the forklift 20 and the plurality of APs 60a to 60c are installed, there may be a place where either one of the reception radio wave intensities Q1 and Q2 becomes weak locally. When the forklift 20 passes through such a place, erroneous determination is likely to occur. In this respect, according to the present embodiment, in the sub communication determination, it is determined to continue over the prescribed period Ta, so that the erroneous determination due to the local change as described above can be suppressed.

(1-3) Here, it can be considered to obtain the sub communication connection state and release the main communication connection state based on the fact that the sub reception radio wave intensity Q2 is higher than the main reception radio wave intensity Q1 without waiting for the continuation over the prescribed period Ta. However, in this case, when the sub communication connection state is set and the main communication connection state is released due to the erroneous determination described above, there are concerns that the remote instruction signal SGa is transmitted and received in an unstable state, and the remote instruction signal SGa may not be transmitted or received.

If such an unstable state occurs, for example, there is concern that a process related to communication connection of once releasing the sub communication connection state and then searching for the sub-target AP 60n again to enter the sub communication connection state is repeatedly performed. In this case, there is a time lag from when the sub communication connection state based on the erroneous determination is set and then once released, until the sub communication connection state is set again. The time lag may be longer than the prescribed period Ta. Furthermore, since the main communication connection state is released and the unconnected state is established, there may occur a problem that the remote instruction signal SGa is not transmitted and received between the remote operation device 40 and the forklift 20 during the time lag.

In this regard, according to the present embodiment, since the setting of the sub communication connection state and the release of the main communication connection state due to an erroneous determination can be suppressed, a time lag caused by repeating the process related to the communication connection as described above can be suppressed from forming, and the problem described above can be suppressed accordingly.

(1-4) When the sub communication connection state is released during the main communication determination, the main wireless microcomputer 82 communicatively connects the main target AP 60m and the main wireless module 81 without waiting for the main communication determination result.

According to such a configuration, when the sub communication connection state is released during the main communication determination, the main target AP 60m and the main wireless module 81 are communicatively connected without waiting for the main communication determination result, and the remote instruction signal SGa is transmitted and received. Thus, it is possible to shorten the period during which the remote instruction signal SGa is not transmitted and received. Therefore, even when the forklift 20 moves out of the communication range of the sub target AP 60n during the main communication determination thus releasing the sub communication connection state, the hindrance to the remote operation can be suppressed.

(1-5) When the main communication connection state is released during the sub communication determination and an abnormality has occurred in the main wireless unit 80, the sub wireless microcomputer 92 communicatively connects the sub target AP 60n and the sub wireless module 91 without waiting for the sub communication determination result.

According to this configuration, when the main communication connection state is released during the sub communication determination and the abnormality has occurred in the main wireless unit 80, the sub target AP 60n and the sub wireless module 91 are communicatively connected without waiting for the sub communication determination result and the remote instruction signal SGa is transmitted and received. Thus, when an abnormality occurs in the main wireless unit 80 during the sub communication determination, the transmission and reception of the remote instruction signal SGa can be started as soon as possible.

(1-6) Here, if no abnormality has occurred in the main wireless unit 80 even if the main communication connection state is released during the sub communication determination, the sub communication connection state is not established and the sub communication determination is continued. Thus, if the main target AP 60m is found again during the sub communication determination, the main target AP 60m and the main wireless module 81 are communicatively connected without performing the main communication determination, and the remote instruction signal SGa is transmitted and received. Thus, the main wireless module 81 can be preferentially communicatively connected.

(1-7) The main wireless unit 80 is electrically connected to the vehicle CPU 73, while the sub wireless unit 90 is not directly electrically connected to the vehicle CPU 73 but is electrically connected to the vehicle CPU 73 by way of the main wireless unit 80. In such a configuration, the signal transmission from the main wireless unit 80 to the vehicle CPU 73 is likely to be faster than the signal transmission from the sub wireless unit 90 to the vehicle CPU 73. Therefore, using the main wireless unit 80 rather than the sub wireless unit 90 makes it easier to improve the responsiveness.

In this respect, in the present embodiment, as in (1-6), the main wireless module 81 can be preferentially communicatively connected rather than the sub wireless module 91, which improves the responsiveness.

(1-8) The sub wireless microcomputer 92 repeatedly performs a scanning process of searching for an AP that exists within the communication range of the sub wireless module 91 as a process of searching for the sub target AP 60n. When a plurality of APs are searched in the scanning process, the sub wireless microcomputer 92 selects one of the plurality of APs as the sub target AP 60n.

In such a configuration, when a plurality of APs are searched in the scanning process during the sub communication determination, the sub wireless microcomputer 92 preferentially sets the AP serving as the determination target of the current sub communication determination as the sub target AP 60n. Specifically, when the plurality of APs searched in the scanning process during the sub communication determination include the AP serving as a determination target of the current sub communication determination, the sub wireless microcomputer 92 selects the relevant AP as the sub target AP 60n.

With this configuration, an AP different from the AP serving as the target of the sub communication determination during the sub communication determination can be prevented from being selected as the sub target AP 60n, so that erroneous determination due to change in the sub target AP 60n during the sub communication determination can be suppressed.

That is, if a plurality of APs are searched by the scanning process and the AP with the largest reception radio wave intensity is selected as the sub target AP 60n, the sub target AP 60n may be changed when the magnitude relationship of the reception radio wave intensities change in the plurality of APs during the sub communication determination. Then, an inconvenience such as an erroneous determination of the sub communication determination may occur.

On the other hand, in the present embodiment, the AP serving as the target of the sub communication determination is continuously selected as the sub target AP 60n, and thus the above inconvenience can be suppressed.

(1-9) The main wireless microcomputer 82 determines as the communication abnormality when the main communication connection state is released in a situation where the sub target AP 60n is not searched over the error determination period.

According to this configuration, when the sub target AP 60n is not searched over the error determination period and the main communication connection state is released, there is a high possibility both of the wireless modules 81 and 91 cannot receive the remote instruction signal SGa. In this case, it is determined as communication abnormality. Thus, it is possible to respond to an event where the remote instruction signal SGa cannot be transmitted and received.

(1-10) The forklift 20 includes a main wireless unit 80 including a main wireless module 81 and a main wireless microcomputer 82 that controls the main wireless module 81, and a sub wireless unit 90 including a sub wireless module 91 and a sub wireless microcomputer 92 that controls the sub wireless module 91. The main wireless unit 80 and the sub wireless unit 90 exchange information with each other.

According to this configuration, the wireless microcomputers 82 and 92 are provided in correspondence with the wireless modules 81 and 91. Then, the wireless units 80 and 90 exchange information with each other. Thus, both wireless units 80 and 90 can independently control both wireless modules 81 and 91, respectively, while exchanging information with each other. Therefore, the processing load can be reduced as compared with the configuration in which one wireless microcomputer controls both wireless modules 81 and 91.

Furthermore, for example, if the configuration is such that execution of the sub communication control process after execution of the main communication control process by one wireless microcomputer is a unit process, and the unit process is repeatedly executed, the responsiveness may lower as the period required to execute the unit process tends to become long. On the other hand, in the present embodiment, both communication control processes are performed in parallel, and hence lowering in responsiveness as described above can be suppressed.

Moreover, even if an abnormality occurs in one of the wireless microcomputers, the remote instruction signal SGa can be continuously transmitted and received using the other wireless microcomputer, and thus the remote operation of the forklift 20 can be continued.

(1-11) The forklift 20 includes both wireless modules 81 and 91, and is remotely operated when either of the wireless modules 81 and 91 receives the remote instruction signal SGa transmitted from at least one of the plurality of APs 60a to 60c provided in the remote operation device 40. When in the main communication connection state, the main wireless module 81 receives the remote instruction signal SGa from the main targetAP 60m.

The sub wireless microcomputer 92 uses the sub wireless module 91 to search for a sub target AP 60n different from the main target AP 60m among the plurality of APs 60a to 60c in a situation of the main communication connection state. The sub wireless microcomputer 92 performs the sub communication determination in a situation of the main communication connection state, and sets the sub communication connection state based on the affirmative sub communication determination result. The sub wireless module 91 receives the remote instruction signal SGa from the sub target AP 60n in the sub communication connection state, and the main wireless microcomputer 82 releases the main communication connection state based on the fact that the sub wireless module 91 received the remote instruction signal SGa from the sub target AP 60n in a situation of the main communication connection state. The effect of (1-1) is thereby achieved.

(1-12) The main communication control process program 83a and the sub communication control process program 93a serving as industrial vehicle remote operation programs are programs for remotely operating the forklift 20 that includes the wireless modules 81 and 91 using the remote operation device 40 that transmit the remote instruction signal SGa using at least one of the plurality of APs 60a to 60c. The wireless modules 81 and 91 receive the remote instruction signal SGa transmitted from the targetAPs 60m and 60n in the communication connection state.

In such a configuration, both communication control process programs 83a, 93a cause the forklift 20 (specifically, both wireless microcomputers 82 and 92) to function to execute the main communication control process and the sub communication control process. The sub communication control process includes a process of searching a sub target AP 60n different from the main target AP 60m among the plurality of APs 60a to 60c using the sub wireless module 91, a process of performing the sub communication determination, and a process of setting the sub communication connection state based on the affirmative sub communication determination result. The main communication control process includes a process of releasing the main communication connection state based on the sub wireless module 91 receiving the remote instruction signal SGa during the main communication connection state. The effect of (1-1) is thereby achieved.

(1-13) An industrial vehicle remote operation method uses the remote operation device 40 that transmits the remote instruction signal SGa using at least one of a plurality of APs 60a to 60c to remotely operate the forklift 20 including the wireless modules 81 and 91. The industrial vehicle remote operation method includes a step in which the main wireless module 81 receives the remote instruction signal SGa transmitted from the main target AP 60m in the main communication connection state, and a step in which the sub wireless module 91 is used to search for the sub target AP 60n different from the main target AP 60m among the plurality of APS 60a to 60c. The industrial vehicle remote operation method includes a step in which the sub wireless microcomputer 92 performs a sub communication determination, a step in which a sub communication connection state is set based on an affirmative sub communication determination result, and a step in which the sub wireless module 91 receives the remote instruction signal SGa. Then, the industrial vehicle remote operation method includes a step of releasing the main communication connection state based on the sub wireless module 91 receiving the remote instruction signal SGa during the main communication connection state. The effect of (1-1) is thereby achieved.

### Second embodiment

In the present embodiment, the electrical configuration of the forklift 20 and the specific content of communication determination are different from those in the first embodiment. The different points will be described below.

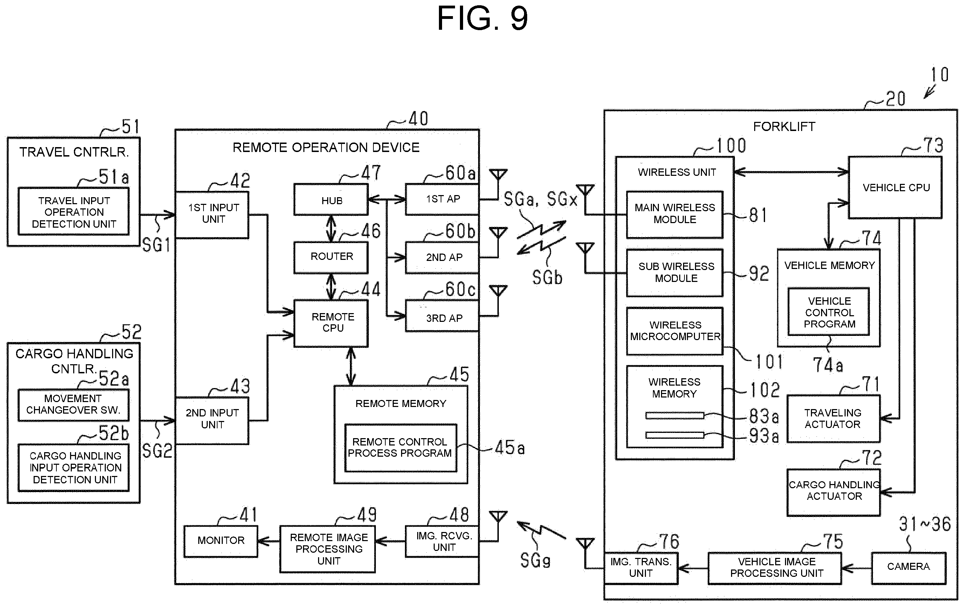

As shown in FIG. 9, in the present embodiment, the forklift 20 includes a single wireless unit 100. The wireless unit 100 is electrically connected to the vehicle CPU 73.

The wireless unit 100 includes a main wireless module 81, a sub wireless module 91, a wireless microcomputer 101 that controls both wireless modules 81 and 91, and a wireless memory 102.

The wireless memory 102 stores a main communication control process program 83a and a sub communication control process program 93a. The wireless microcomputer 101 executes both the main communication control process and the sub communication control process. For example, the wireless microcomputer 101 repeatedly executes the unit process, the unit process being executing the main communication control process and then executing the sub communication control process.

Next, the main communication control process of the present embodiment will be described.

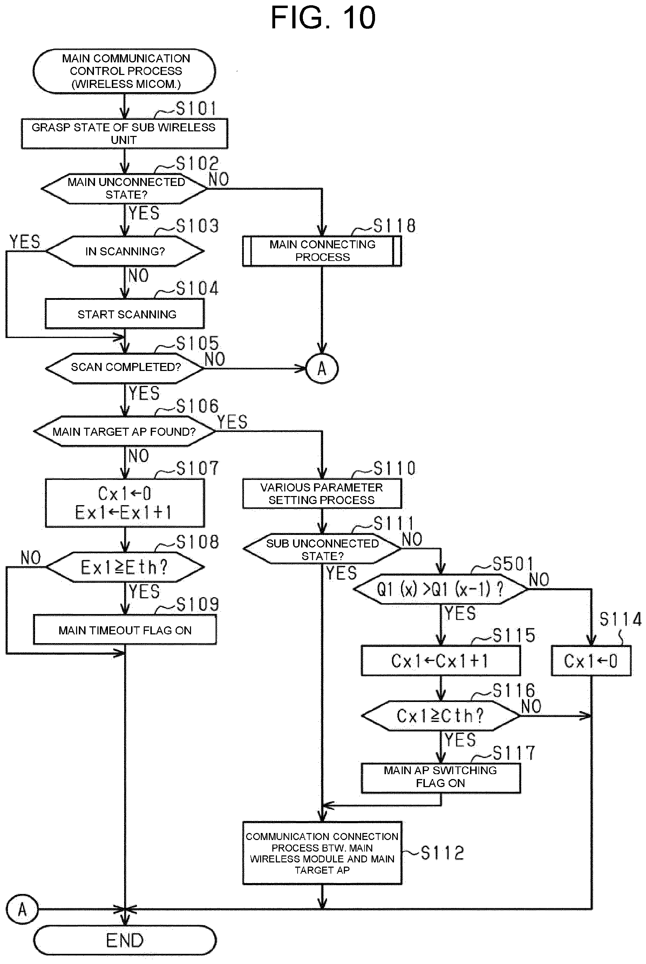

As shown in FIG. 10, in the main communication control process of the present embodiment, the specific processing content of the main communication determination is different.

Specifically, after the negative determination is made in step S111, the wireless microcomputer 101 determines in step S501 whether or not the latest main reception radio wave intensity Q1 (hereinafter, simply referred to as Q1(x)) is larger than the previous main reception radio wave intensity Q1 (hereinafter, also simply referred to as Q1(x-1)) with respect to the latest main reception radio wave intensity Q1 (Q1(x) > Q1(x-1)?).

Q1(x) is the main reception radio wave intensity Q1 obtained in the scan result of this time, and Q1 (x-1) is the main reception radio wave intensity Q1 obtained in the scan result of the previous time. In other words, it can be said that Q1(x-1) is the main reception radio wave intensity Q1 before the update and Q1(x) is the main reception radio wave intensity Q1 after the update.

The wireless microcomputer 101 proceeds to step S114 if Q1(x) ≤ Q1(x-1), and proceeds to step S115 if Q1(x) > Q1 (x-1).

According to such a configuration, when the main reception radio wave intensity Q1 is sequentially increased over the number of times of the specified threshold Cth, the main wireless module 81 and the main target AP 60m are communicatively connected. That is, in the present embodiment, a case where the main communication determination result is affirmative is a case where the main reception radio wave intensity Q1 gradually increases over the prescribed period Ta. The prescribed period Ta is a period required for performing the scanning process of the number of times of the specified threshold Cth in the present embodiment. However, this is not the sole case, and the prescribed period Ta is arbitrary.

On the other hand, a case where the main communication determination result is negative in the present embodiment is a case where the main reception radio wave intensity Q1 becomes the same or decreases, or the main target AP 60m that was the target of the main communication determination is no longer found before the elapse of the prescribed period Ta from the start of the main communication determination.

Next, the sub communication control process of the present embodiment will be described.

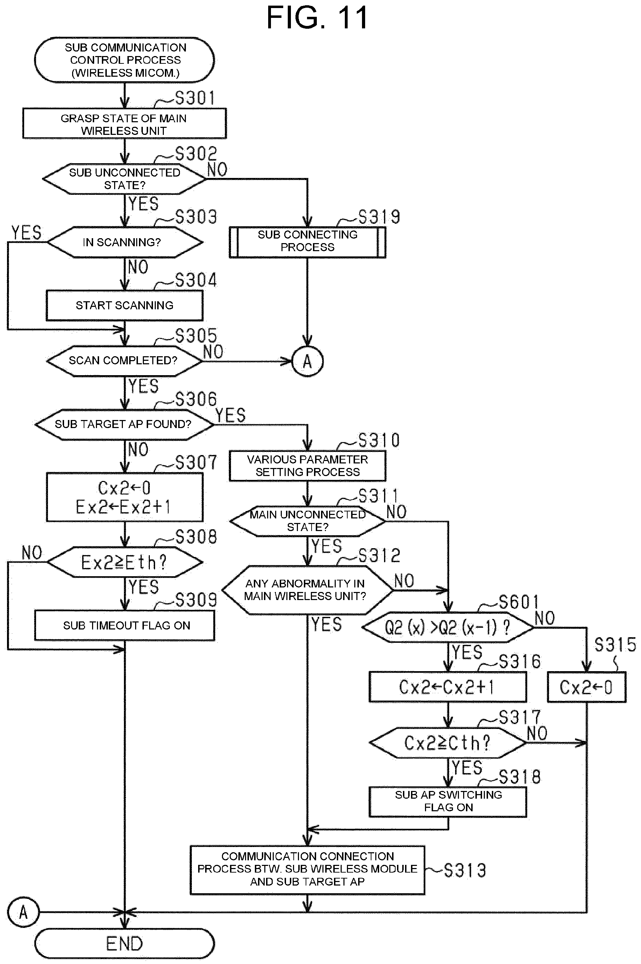

As shown in FIG. 11, in the sub communication control process of the present embodiment, the specific processing content of the sub communication determination is different.

Specifically, after the negative determination is made in step S311 or step S312, the wireless microcomputer 101 determines in step S601 whether or not the latest sub reception radio wave intensity Q2 (hereinafter, simply referred to as Q2(x)) is larger than the previous sub reception radio wave intensity Q2 (hereinafter, also simply referred to as Q2(x-1)) with respect to the latest sub reception radio wave intensity Q2 (Q2(x) > Q2(x-1)?).

Q2(x) is the sub reception radio wave intensity Q2 obtained in the scan result of this time, and Q2(x-1) is the sub reception radio wave intensity Q2 obtained in the scan result of the previous time. In other words, it can be said that Q2(x-1) is the sub reception radio wave intensity Q2 before the update and Q2(x) is the sub reception radio wave intensity Q2 after the update.

The wireless microcomputer 101 proceeds to step S315 if Q2(x) ≤ Q2(x-1), and proceeds to step S316 if Q2(x) > Q2(x-1).

According to such a configuration, when the sub reception radio wave intensity Q2 is sequentially increased over the number of times of the specified threshold Cth, the sub wireless module 91 and the sub target AP 60n are communicatively connected. That is, in the present embodiment, a case where the sub communication determination result is affirmative is a case where the sub reception radio wave intensity Q2 gradually increases over the prescribed period Ta.

On the other hand, a case where the sub communication determination result is negative in the present embodiment is a case where the sub reception radio wave intensity Q2 becomes the same or decreases, or the sub target AP 60n that was the target of the sub communication determination is no longer found before the elapse of the prescribed period Ta from the start of the sub communication determination.

In the present embodiment, even if the main reception radio wave intensity Q1 when the main communication determination result is affirmative is smaller than the sub reception radio wave intensity Q2 in the sub communication connection state, the main communication connection state is set and the sub communication connection state is released.

Similarly, even if the sub reception radio wave intensity Q2 when the sub communication determination result is affirmative is smaller than the main reception radio wave intensity Q1 in the main communication connection state, the sub communication connection state is set and the main communication connection state is released.

The present embodiment described in detail above has the following effects.

(2-1) The forklift 20 includes a single wireless unit 100 having a main wireless module 81, a sub wireless module 91, and a wireless microcomputer 101 that controls both wireless modules 81 and 91.

According to this configuration, the configuration can be simplified as compared with the configuration in which two wireless units are provided so as to correspond to both wireless modules 81 and 91.

(2-2) In the sub communication determination, it is determined whether or not the sub reception radio wave intensity Q2 is gradually increasing over the prescribed period Ta.

When the sub reception radio wave intensity Q2 gradually increases, there is a high possibility the forklift 20 is approaching the sub target AP 60n. In this respect, according to the present embodiment, the communication connection between the sub target AP 60n and the sub wireless module 91 is performed based on the fact that the sub reception radio wave intensity Q2 is gradually increasing over the prescribed period Ta. Thus, the remote operation of the forklift 20 advancing in the advancing direction can be suitably performed by transmitting and receiving the remote instruction signal SGa between the sub target AP 60n that is likely to be in the advancing direction and the sub wireless module 91,

The embodiments described above may be modified as follows.
- The remote operation device 40 may be configured to remotely operate a plurality of forklifts 20. In this case, the plurality of APs 60a to 60c may be configured to communicatively connect with only one forklift 20 or may be configured to communicatively connect with the plurality of forklifts 20 simultaneously.

Here, in the configuration in which the plurality of APs 60a to 60c are communicatively connected simultaneously with the plurality of forklifts 20, each of the plurality of forklifts 20 can be in the main communication connection state and the sub communication connection state. For example, the first AP 60a may be communicatively connected to both the main wireless module 81 of the first forklift 20 and the main wireless module 81 of the second forklift 20.
- The target APs 60m and 60n may be configured to transmit the remote instruction signal SGa but not to transmit the beacon signal SGx.
- The unconnected AP 60x may be configured to transmit both the remote instruction signal SGa and the beacon signal SGx. In this case, the wireless modules 81 and 91 may be configured not to receive the remote instruction signal SGa from the unconnected AP 60x, or may be configured to receive the remote instruction signal SGa.

When the wireless modules 81 and 91 receive the remote instruction signal SGa from the unconnected AP 60x, the wireless microcomputers 82 and 92 may discard the remote instruction signal SGa from the unconnected AP 60x not in the communication connection state without converting it to a control signal. That is, the forklift 20 merely needs to be configured to move based on the remote instruction signal SGa from the target APs 60m and 60n in the communication connection state, but not to move based on the remote instruction signal SGa from the unconnected AP.
- When the main wireless module 81 receives the plurality of beacon signals SGx, the main wireless microcomputer 82 may adopt the AP that has transmitted the beacon signal SGx having the largest reception radio wave intensity among the plurality of beacon signals SGx as the main target AP 60m in step S106. In this case, the main target AP 60m may be changed during the main communication determination. The same applies to the process of step S306 of the sub wireless microcomputer 92.
- When the main wireless microcomputer 82 finds a plurality of APs, the main communication determination mau be performed for each of the APs. That is, the main targetAP 60m may be in plurals.

In this case, the main wireless microcomputer 82 may communicatively connect with the main target AP 60m for which the main communication determination result became affirmative first. Alternatively, the main wireless microcomputer 82 may wait until the main communication determination result of each AP is obtained, and when an affirmative determination is made for the plurality of main target APs 60m, communicatively connect with the main target AP 60m having the largest main reception radio wave intensity Q1 among the plurality of main target APs 60m. The same applies to the sub side.
- The main wireless microcomputer 82 may determine whether or not the sub wireless unit 90 has an abnormality in step S209 based on the grasped result in step S101. The abnormality of the sub wireless unit 90 is arbitrary, but may include, for example, an abnormality of a component forming the sub wireless unit 90 or a setting of a sub timeout flag.
- The main wireless microcomputer 82 may execute a communication error process when an abnormality occurs in the sub wireless unit 90 in a situation of the main unconnected state.
- The main wireless microcomputer 82 may execute the communication error process based on the fact that the sub unconnected state is set in a situation where an abnormality has occurred in the main wireless unit 80. In this case, the processes of steps S409 and S410 may be omitted.
- The timing for executing the communication error process is arbitrary.
- The abnormality detection of the wireless units 80 and 90 and the communication error process may be omitted.
- The fact that the main target AP 60m cannot be found (setting of the main timeout flag) may not be included in the abnormal state of the main wireless unit 80. Similarly, the fact that the sub target AP 60n cannot be found (setting of the sub timeout flag) may not be included in the abnormal state of the sub wireless unit 90.
- The prescribed period Ta may be different between the main communication determination and the sub communication determination. Specifically, the specified threshold Cth in step S116 and the specified threshold Cth in step S317 may be different. For example, the specified threshold Cth in step S116 may be smaller than the specified threshold Cth in step S317. In this case, since the main communication determination result is likely to be affirmative, the transmission and reception of the remote instruction signal SGa using the main wireless module 81 can be prioritized over the sub wireless module 91.
- Similarly, the threshold intensity δQ used in step S113 and the threshold intensity δQ used in step S314 may be different. For example, the threshold intensity δQ used in step S113 may be smaller than the threshold intensity δQ used in step S314. Thus, the main communication determination result is more likely to be affirmative than when the sub communication determination result is to be affirmative, so that the main wireless unit 80 can be preferentially used.
- At least one of the processes of steps S107 to S109 and the processes of steps S307 to S309 may be omitted.
- The specific processing contents of the main communication control process and the sub communication control process are not limited to the respective embodiments, and are arbitrary as long as that which transmits and receives the remote instruction signal SGa can be appropriately switched without the transmission and reception of the remote instruction signal SGa being interrupted.
- In the second embodiment, when the wireless microcomputer 101 makes a negative determination in step S501, the main prescribed period counter Cx1 may be decremented (subtract "1") instead of resetting the main prescribed period counter Cx1 to "0". Even in this case, it can be said that the main reception radio wave intensity Q1 is gradually increasing, that is, the main reception radio wave intensity Q1 is in an increasing tendency as the main prescribed period counter Cx1 becomes greater than or equal to the specified threshold Cth. The prescribed period Ta in this modification is the period from the start of the main communication determination until the main prescribed period counter Cx1 reaches the specified threshold Cth. Similarly, when the wireless microcomputer 101 makes a negative determination in step S601, the sub prescribed period counter Cx2 may be decremented (subtract "1") instead of resetting the sub prescribed period counter Cx2 to "0".

That is, a state in which the reception radio wave intensity gradually increases over the prescribed period is not limited to the configuration in which it increases every time scanning is performed, and includes a configuration in which it increases as a whole with some decrease.

Furthermore, for example, the wireless microcomputer 101 may count the number of times that the main reception radio wave intensity Q1 has become larger and the number of times that it has become smaller than the previous scan in the scanning process of the specified number of times, and when the number of times that it has become larger is greater than the number of times that it has become smaller by greater than or equal to the threshold, may determine that the reception radio wave intensity is gradually increasing.

Furthermore, the wireless microcomputer 101 may perform the communication determination based on at least the reception radio wave intensity obtained in the first scanning process and the reception radio wave intensity obtained in the last scanning process in the scanning process of the specified number of times. For example, when the reception radio wave intensity obtained in the last scanning process is larger than the reception radio wave intensity obtained in the first scanning process by greater than or equal to a threshold, the wireless microcomputer 101 may determine that the reception radio wave intensity is gradually increasing over the prescribed period Ta which is the period required for the scanning process of the specified number of times, and may make an affirmative determination for the communication determination.
- In each embodiment, the prescribed period Ta is set as a condition for both communication determinations, but the condition regarding the prescribed period Ta is not essential. However, from the viewpoint of suppressing erroneous determination, it is preferable that the condition regarding the prescribed period Ta is set.
- In the first embodiment, the sub wireless unit 90 may be electrically connected to the vehicle CPU 73. In short, the main wireless unit 80 and the sub wireless unit 90 do not have to be different.
- The abnormality determination process of the main wireless unit 80 in step S312 may be omitted. That is, the sub wireless microcomputer 92 may set the sub communication connection state without performing the sub communication determination the sub target AP 60n is found in a situation of the main unconnected state, and may set the sub communication connection state without waiting for the sub communication determination result when the main communication connection state is released and the main unconnected state is set during the sub communication determination.
- The image transmitting unit 76 and the image receiving unit 48 may be omitted, and the image signal SGg may be transmitted and received between the plurality of APs 60a to 60c and the wireless modules 81 and 91.
- The cameras 31 to 36, the monitor 41, and the like may be omitted. In this case, the worker may visually perform the remote operation of the forklift 20 using the remote operation device 40.
- The number of wireless modules in the forklift 20 is arbitrary as long as it is two or more, and may be three or more. In this case, the forklift 20 may be configured so that the wireless modules that transmit and receive the remote instruction signal SGa are sequentially switched, or so that two or more wireless modules are simultaneously in the communication connection state. In this case, even if an abnormality occurs in the communication of one wireless module, the remote instruction signal SGa can be immediately transmitted and received using the other wireless module.
- The specific configuration of the remote operation device 40 is arbitrary, and for example, may be a general-purpose product such as a smartphone.
- The industrial vehicle is not limited to the forklift 20 and is arbitrary. The industrial vehicle may have one or a plurality of movement objects (in other words, operation objects) that perform movements other than the traveling movement.
- A storage medium in which the main communication control process program 83a and the sub communication control process program 93a are stored may be prepared separately, and the remote operation of the forklift 20 by the remote operation device 40, and the like may be performed with the storage medium connected to the forklift 20.
- Each embodiment and each modification may be combined appropriately.

Next, a suitable example that can be grasped from the above-described embodiment and the modification will be described below.
(A) The industrial vehicle preferably comprises a drive control unit that drive controls the industrial vehicle based on the remote instruction signal received by either of the vehicle communication units.

### Reference Signs List

- 10: industrial vehicle remote operation system
- 20: forklift
- 31 to 36: camera
- 40: remote operation device
- 44: remote CPU
- 60a to 60c: AP (access point)
- 60m: main targetAP
- 60n: sub target AP
- 60x: unconnected AP
- 71, 72: actuator (drive unit)
- 73: vehicle CPU
- 74a: vehicle control program
- 80: main wireless unit
- 81: main wireless module
- 82: main wireless microcomputer
- 83: main wireless memory
- 83a: main communication control process program
- 90: sub wireless unit
- 91: sub wireless module
- 92: sub wireless microcomputer
- 93: sub wireless memory
- 93a: sub communication control process program
- 100: wireless unit
- 101: wireless microcomputer
- 102: wireless memory
- Q1: main reception radio wave intensity
- Q2: sub reception radio wave intensity
- Ta: prescribed period
- SGa: remote instruction signal
- SGx: beacon signal

## Claims

1. An industrial vehicle remote operation system (10) comprising:
an industrial vehicle (20) having a plurality of vehicle communication units including a first vehicle communication unit (81) and a second vehicle communication unit (91) that perform wireless communication;
a remote operation device (40) having a plurality of remote communication units (60a-60c) that are arranged spaced apart from each other and perform wireless communication, the remote operation device (40) remotely operating the industrial vehicle (20) by transmitting a remote instruction signal (SGa) instructing remote operation using at least one of the plurality of remote communication units (60a-60c), wherein
the first vehicle communication unit (81), when in a first communication connection state of being communicatively connected to a first target remote communication unit (60m) among the plurality of remote communication units (60a-60c), receives the remote instruction signal (SGa) transmitted from the first target remote communication unit (60m),
**characterized in that** the industrial vehicle (20) includes
a searching unit (82, 92) that searches for a second target remote communication unit (60n) that is different from the first target remote communication unit (60m) among the plurality of remote communication units (60a-60c) using the second vehicle communication unit (91),
a determination unit (82, 92) that determines whether or not to communicatively connect the second target remote communication unit (60n) and the second vehicle communication unit (91) based on a reception radio wave intensity (Q1, Q2) of a signal that is transmitted from the second target remote communication unit (60n) and received by the second vehicle communication unit (91) in a situation of the first communication connection state, and
a communication connection unit (82, 92) that communicatively connects the second target remote communication unit (60n) and the second vehicle communication unit (91) based on an affirmative determination result of the determination unit (82, 92),
the second vehicle communication unit (91), when in a second communication connection state of being communicatively connected to the second target remote communication unit (60n), receives the remote instruction signal (SGa) transmitted from the second target remote communication unit (60n), and
the industrial vehicle (20) includes a connection release unit (82, 92) that releases the first communication connection state so as to allow the first vehicle communication unit (81) to communicatively connect with one of the plurality of remote communication units (60a-60c) based on the second vehicle communication unit (91) receiving the remote instruction signal (SGa) from the second target remote communication unit (60n).

2. The industrial vehicle remote operation system (10) according to claim 1, **characterized in that** the determination unit (82, 92) determines whether a state in which a second reception radio wave intensity (Q1) serving as the reception radio wave intensity (Q1, Q2) is higher than a first reception radio wave intensity (Q1) which is a reception radio wave intensity (Q1, Q2) of a signal that is transmitted from the first target remote communication unit (60m) and received by the first vehicle communication unit (81) by greater than or equal to a threshold (δQ) is continued over a prescribed period (Ta).

3. The industrial vehicle remote operation system (10) according to claim 1, **characterized in that** the determination unit (82, 92) determines whether the reception radio wave intensity (Q1, Q2) is gradually increased over a prescribed period (Ta).

4. The industrial vehicle remote operation system (10) according to any one of claims 1 to 3, further comprising a preceding communication connection unit (82) that communicatively connects the second target remote communication unit (60n) and the second vehicle communication unit (91) without waiting for the determination result of the determination unit (92) when the first communication connection state is released in a situation where determination is performed by the determination unit (82, 92).

5. The industrial vehicle remote operation system (10) according to any one of claims 1 to 4, **characterized in that**
the searching unit (92) repeatedly performs a searching process of searching for the remote communication unit (60a-60c) existing within a communication range of the second vehicle communication unit (91), and selects the second target remote communication unit (60n) from one or more remote communication units (60a-60c) searched by the searching process, and
the searching unit (92) preferentially selects the remote communication unit (60a-60c) of current determination target of the determination unit (82, 92) as the second target remote communication unit (60n) when a plurality of the remote communication units (60a-60c) is searched in the searching processing in a situation where determination is performed by the determination unit (82, 92).

6. The industrial vehicle remote operation system (10) according to any one of claims 1 to 5, **characterized in that** the industrial vehicle includes a communication abnormality determination unit (82, 92) that determines communication abnormality when the first communication connection state is released in a situation where the second target remote communication unit (60n) is not searched by the searching unit (82, 92) over an error determination period.

7. The industrial vehicle remote operation system (10) according to any one of claims 1 to 6, **characterized in that**
the industrial vehicle (20) includes,
a first wireless unit (80, 90) having a first wireless module (81) as the first vehicle communication unit (81), and a first wireless microcomputer (82) that controls the first wireless module (82), and
a second wireless unit (80, 90) having a second wireless module (91) as the second vehicle communication unit (91), and a second wireless microcomputer (92) that controls the second wireless module (91), and
the first wireless unit and the second wireless unit exchange information with each other.

8. The industrial vehicle remote operation system (10) according to any one of claims 1 to 6, **characterized in that**
the first vehicle communication unit (81) is a first wireless module (81),
the second vehicle communication unit (91) is a second wireless module (91), and
the industrial vehicle remote operation system (10) includes a single wireless unit having a wireless microcomputer that controls the first wireless module (81) and the second wireless module (91).

9. An industrial vehicle (20) configured to be remotely operated by a remote instruction signal (SGa) that instructs remote operation transmitted using at least one of a plurality of remote communication units (60a-60c) arranged spaced apart from each other in a remote operation device (40), wherein
the industrial vehicle (20) comprises a plurality of vehicle communication units including a first vehicle communication unit (81) and a second vehicle communication unit (91) that perform wireless communication,
the first vehicle communication unit (81), when in a first communication connection state of being communicatively connected to a first target remote communication unit (60m) among the plurality of remote communication units (60a-60c), receives the remote instruction signal (SGa) transmitted from the first target remote communication unit (60m),
the industrial vehicle (20) being **characterized in that** it includes
a searching unit (82, 92) that searches for a second target remote communication unit (60n) that is different from the first target remote communication unit (60m) among the plurality of remote communication units (60a-60c) using the second vehicle communication unit (91),
a determination unit (82, 92) that determines whether or not to communicatively connect the second target remote communication unit (60n) and the second vehicle communication unit (91) based on a reception radio wave intensity (Q1, Q2) of a signal that is transmitted from the second target remote communication unit (60n) and received by the second vehicle communication unit (91) in a situation of the first communication connection state, and
a communication connection unit (82, 92) that communicatively connects the second target remote communication unit (60n) and the second vehicle communication unit (91) based on an affirmative determination result of the determination unit (82, 92),
the second vehicle communication unit (91), when in a second communication connection state of being communicatively connected to the second target remote communication unit (60n), receives the remote instruction signal (SGa) transmitted from the second target remote communication unit (60n), and
the industrial vehicle (20) includes a connection release unit (82, 92) that releases the first communication connection state so as to allow the first vehicle communication unit (81) to communicatively connect with one of the plurality of remote communication units (60a-60c) based on the second vehicle communication unit (91) receiving the remote instruction signal (SGa) from the second target remote communication unit (60n).

10. An industrial vehicle remote operation method that uses a remote operation device (40) to remotely operate an industrial vehicle (20), the remote operation device (40) having a plurality of remote communication units (60a-60c) that are arranged spaced apart from each other and perform wireless communication, and transmitting a remote instruction signal (SGa) instructing remote operation using at least one of the plurality of remote communication units (60a-60c), the industrial vehicle (20) having a plurality of vehicle communication units including a first vehicle communication unit (81) and a second vehicle communication unit (91) that perform wireless communication,
the industrial vehicle remote operation method comprises the steps of:
a first receiving step (S202) in which the first vehicle communication unit (81), when in a first communication connection state of being communicatively connected to a first target remote communication unit (60m) among the plurality of remote communication units (60a-60c), receives the remote instruction signal (SGa) transmitted from the first target remote communication unit (60m); **characterized in that** the industrial vehicle remote operation method further comprises the steps of:
a searching step in which the industrial vehicle (20) searches for a second target remote communication unit (60n) that is different from the first target remote communication unit (60m) among the plurality of remote communication units (60a-60c) using the second vehicle communication unit;
a determination step in which the industrial vehicle (20) determines whether or not to communicatively connect the second target remote communication unit (60n) and the second vehicle communication unit (91) based on a reception radio wave intensity (Q1, Q2) of a signal that is transmitted from the second target remote communication unit (60n) and received by the second vehicle communication unit (91) in a situation of the first communication connection state;
a communication connection step in which the industrial vehicle (20) communicatively connects the second target remote communication unit (60n) and the second vehicle communication unit (91) based on an affirmative determination result of the determination step; and
a second receiving step (S402) in which the second vehicle communication unit (91), when in a second communication connection state of being communicatively connected to the second target remote communication unit (60n), receives the remote instruction signal (SGa) transmitted from the second target remote communication unit (60n), and
a connection release step in which the industrial vehicle (20) releases the first communication connection state so as to allow the first vehicle communication unit (81) to communicatively connect with one of the plurality of remote communication units (60a-60c) based on the second vehicle communication unit (91) receiving the remote instruction signal (SGa) from the second target remote communication unit (60n).

11. An industrial vehicle remote operation program comprising instructions which, when the program is executed by a computer, cause the computer to carry out the method of claim 10.

## Patentansprüche

1. Industriefahrzeugfernbetriebssystem (10), mit:
einem Industriefahrzeug (20) mit einer Vielzahl von Fahrzeugkommunikationseinheiten einschließlich einer ersten Fahrzeugkommunikationseinheit (81) und einer zweiten Fahrzeugkommunikationseinheit (91), die Drahtloskommunikation durchführen;
einem Fernbetriebsgerät (40) mit einer Vielzahl von Fernkommunikationseinheiten (60a-60c), die voneinander beabstandet angeordnet sind und Drahtloskommunikation durchführen, wobei das Fernbetriebsgerät (40) das Industriefahrzeug (20) fernbetreibt durch Übertragen eines Fernbefehlssignals (SGa), das Fernbetrieb befiehlt, unter Verwendung von zumindest einer aus der Vielzahl von Fernkommunikationseinheiten (60a-60c), wobei
die erste Fahrzeugkommunikationseinheit (81), wenn in einem ersten Kommunikationsverbindungszustand eines kommunikativ mit einer ersten Zielfernkommunikationseinheit (60m) unter der Vielzahl von Fernkommunikationseinheiten (60a-60c) verbunden seins, das von der ersten Zielfernkommunikationseinheit (60m) übertragene Fernbefehlssignal (SGa) empfängt,
**dadurch gekennzeichnet, dass** das Industriefahrzeug (20) umfasst:
eine Sucheinheit (82, 92), die unter Verwendung der zweiten Fahrzeugkommunikationseinheit (91) nach einer zweiten Zielfernkommunikationseinheit (60n) sucht, die sich von der ersten Zielfernkommunikationseinheit (60m) unterscheidet, unter der Vielzahl von Fernkommunikationseinheiten (60a-60c),
eine Bestimmungseinheit (82, 92), die bestimmt, ob die zweite Zielfernkommunikationseinheit (60n) und die zweite Fahrzeugkommunikationseinheit (91) kommunikativ zu verbinden sind oder nicht, basierend auf einer Empfangsfunkwellenintensität (Q1, Q2) eines Signals, das von der zweiten Zielfernkommunikationseinheit (60n) übertragen und durch die zweite Fahrzeugkommunikationseinheit (91) empfangen ist, in einer Situation des ersten Kommunikationsverbindungszustandes, und
eine Kommunikationsverbindungseinheit (82, 92), die die zweite Zielfernkommunikationseinheit (60n) und die zweite Fahrzeugkommunikationseinheit (91) basierend auf einem zustimmenden Bestimmungsergebnis der Bestimmungseinheit (82, 92) kommunikativ verbindet, wobei
die zweite Fahrzeugkommunikationseinheit (91), wenn in einem zweiten Kommunikationsverbindungszustand eines kommunikativ mit der zweiten Zielfernkommunikationseinheit (60n) verbunden seins, das von der zweiten Zielfernkommunikationseinheit (60n) übertragene Fernbefehlssignal (SGa) empfängt, und
das Industriefahrzeug (20) eine Verbindungsfreigabeeinheit (82, 92) aufweist, die den ersten Kommunikationsverbindungszustand freigibt, um es der ersten Fahrzeugkommunikationseinheit (81) zu ermöglichen, mit einer der Vielzahl von Fernkommunikationseinheiten (60a-60c) kommunikativ zu verbinden, basierend auf einem Empfang des Fernbefehlssignals (SGa) durch die zweite Fahrzeugkommunikationseinheit (91) von der zweiten Zielfernkommunikationseinheit (60n).

2. Industriefahrzeugfernbetriebssystem (10) nach Anspruch 1, wobei die Bestimmungseinheit (82, 92) bestimmt, ob ein Zustand, in dem eine zweite Empfangsfunkwellenintensität (Q1), die als die Empfangsfunkwellenintensität (Q1, Q2) dient, um mehr als oder gleich wie einem Schwellenwert (δQ) höher ist als eine erste Empfangsfunkwellenintensität (Q1), die eine Empfangsfunkwellenintensität (Q1, Q2) eines Signals ist, das von der ersten Zielfernkommunikationseinheit (60m) übertragen und durch die erste Fahrzeugkommunikationseinheit (81) empfangen ist, über einen vorbestimmten Zeitraum (Ta) fortgesetzt ist.

3. Industriefahrzeugfernbetriebssystem (10) nach Anspruch 1, wobei die Bestimmungseinheit (82, 92) bestimmt, ob die Empfangsfunkwellenintensität (Q1, Q2) über einen vorbestimmten Zeitraum (Ta) graduell erhöht ist.

4. Industriefahrzeugfernbetriebssystem (10) nach einem der Ansprüche 1 bis 3, ferner mit einer Vorherkommunikationsverbindungseinheit (82), die die zweite Zielfernkommunikationseinheit (60n) und die zweite Fahrzeugkommunikationseinheit (91) kommunikativ verbindet, ohne auf das Bestimmungsergebnis der Bestimmungseinheit (92) zu warten, wenn der erste Kommunikationsverbindungszustand freigegeben ist, in einer Situation, in der eine Bestimmung durch die Bestimmungseinheit (82, 92) durchgeführt ist.

5. Industriefahrzeugfernbetriebssystem (10) nach einem der Ansprüche 1 bis 4, wobei
die Sucheinheit (92) wiederholt einen Suchprozess einer Suche nach der Fernkommunikationseinheit (60a-60c), die innerhalb eines Kommunikationsbereichs der zweiten Fahrzeugkommunikationseinheit (91) existiert, durchführt, und die zweite Zielfernkommunikationseinheit (60n) aus einer oder mehreren Fernkommunikationseinheiten (60a-60c), die durch den Suchprozess gesucht sind, auswählt, und
die Sucheinheit (92) bevorzugt die Fernkommunikationseinheit (60a-60c) eines gegenwärtigen Bestimmungsziels der Bestimmungseinheit (82, 92) als die zweite Zielfernkommunikationseinheit (60n) auswählt, wenn eine Vielzahl der Fernkommunikationseinheiten (60a-60c) in der Suchverarbeitung gesucht ist, in einer Situation, in der eine Bestimmung durch die Bestimmungseinheit (82, 92) durchgeführt ist.

6. Industriefahrzeugfernbetriebssystem (10) nach einem der Ansprüche 1 bis 5, wobei das Industriefahrzeug eine Kommunikationsanomaliebestimmungseinheit (82, 92) aufweist, die eine Kommunikationsanomalie bestimmt, wenn der erste Kommunikationsverbindungszustand freigegeben ist, in einer Situation, in der die zweite Zielfernkommunikationseinheit (60n) über einen Fehlerbestimmungszeitraum nicht von der Sucheinheit (82, 92) gesucht ist.

7. Industriefahrzeugfernbetriebssystem (10) nach einem der Ansprüche 1 bis 6, wobei
das Industriefahrzeug (20) umfasst
eine erste Drahtloseinheit (80, 90) mit einem ersten Drahtlosmodul (81) als die erste Fahrzeugkommunikationseinheit (81), und einen ersten Drahtlosmikrocomputer (82), der das erste Drahtlosmodul (82) steuert, und
eine zweite Drahtloseinheit (80, 90) mit einem zweiten Drahtlosmodul (91) als die zweite Fahrzeugkommunikationseinheit (91), und einen zweiten Drahtlosmikrocomputer (92), der das zweite Drahtlosmodul (91) steuert, und
die erste Drahtloseinheit und die zweite Drahtloseinheit Informationen miteinander austauschen.

8. Industriefahrzeugfernbetriebssystem (10) nach einem der Ansprüche 1 bis 6, wobei
die erste Fahrzeugkommunikationseinheit (81) ein erstes Drahtlosmodul (81) ist,
die zweite Fahrzeugkommunikationseinheit (91) ein zweites Drahtlosmodul (91) ist, und
das Industriefahrzeugfernbetriebssystem (10) eine einzelne Drahtloseinheit mit einem Drahtlosmikrocomputer aufweist, der das erste Drahtlosmodul (81) und das zweite Drahtlosmodul (91) steuert.

9. Industriefahrzeug (20), das dazu eingerichtet ist, um durch ein Fernbefehlssignal (SGa) fernbetrieben zu werden, das einen Fernbetrieb befiehlt, der unter Verwendung von zumindest einer aus einer Vielzahl von Fernkommunikationseinheiten (60a-60c) übertragen ist, die in einem Fernbetriebsgerät (40) voneinander beabstandet angeordnet sind, wobei
das Industriefahrzeug (20) eine Vielzahl von Fahrzeugkommunikationseinheiten einschließlich einer ersten Fahrzeugkommunikationseinheit (81) und einer zweiten Fahrzeugkommunikationseinheit (91), die Drahtloskommunikation durchführen, umfasst,
die erste Fahrzeugkommunikationseinheit (81), wenn in einem ersten Kommunikationsverbindungszustand eines kommunikativ mit einer ersten Zielfernkommunikationseinheit (60m) unter der Vielzahl von Fernkommunikationseinheiten (60a-60c) verbunden seins, das von der ersten Zielfernkommunikationseinheit (60m) übertragene Fernbefehlssignal (SGa) empfängt,
wobei das Industriefahrzeug (20) **dadurch gekennzeichnet ist, dass** es umfasst
eine Sucheinheit (82, 92), die unter Verwendung der zweiten Fahrzeugkommunikationseinheit (91) nach einer zweiten Zielfernkommunikationseinheit (60n) sucht, die sich von der ersten Zielfernkommunikationseinheit (60m) unterscheidet, unter der Vielzahl von Fernkommunikationseinheiten (60a-60c),
eine Bestimmungseinheit (82, 92), die bestimmt, ob die zweite Zielfernkommunikationseinheit (60n) und die zweite Fahrzeugkommunikationseinheit (91) kommunikativ zu verbinden sind oder nicht, basierend auf einer Empfangsfunkwellenintensität (Q1, Q2) eines Signals, das von der zweiten Zielfernkommunikationseinheit (60n) übertragen und durch die zweite Fahrzeugkommunikationseinheit (91) empfangen ist, in einer Situation des ersten Kommunikationsverbindungszustandes, und
eine Kommunikationsverbindungseinheit (82, 92), die die zweite Zielfernkommunikationseinheit (60n) und die zweite Fahrzeugkommunikationseinheit (91) basierend auf einem zustimmenden Bestimmungsergebnis der Bestimmungseinheit (82, 92) kommunikativ verbindet, wobei
die zweite Fahrzeugkommunikationseinheit (91), wenn in einem zweiten Kommunikationsverbindungszustand eines kommunikativ mit der zweiten Zielfernkommunikationseinheit (60n) verbunden seins, das von der zweiten Zielfernkommunikationseinheit (60n) übertragene Fernbefehlssignal (SGa) empfängt, und
das Industriefahrzeug (20) eine Verbindungsfreigabeeinheit (82, 92) aufweist, die den ersten Kommunikationsverbindungszustand freigibt, um es der ersten Fahrzeugkommunikationseinheit (81) zu ermöglichen, mit einer der Vielzahl von Fernkommunikationseinheiten (60a-60c) kommunikativ zu verbinden, basierend auf einem Empfang des Fernbefehlssignals (SGa) durch die zweite Fahrzeugkommunikationseinheit (91) von der zweiten Zielfernkommunikationseinheit (60n).

10. Industriefahrzeugfernbetriebsverfahren, das ein Fernbetriebsgerät (40) verwendet, um ein industrielles Fahrzeug (20) fernzubetreiben, wobei das Fernbetriebsgerät (40) eine Vielzahl von Fernkommunikationseinheiten (60a-60c) aufweist, die voneinander beabstandet angeordnet sind und Drahtloskommunikation durchführen, und ein Fernbefehlssignal (SGa) überträgt, das Fernbetrieb befiehlt, unter Verwendung von zumindest einer der Vielzahl von Fernkommunikationseinheiten (60a-60c), wobei das Industriefahrzeug (20) eine Vielzahl von Fahrzeugkommunikationseinheiten einschließlich einer ersten Fahrzeugkommunikationseinheit (81) und einer zweiten Fahrzeugkommunikationseinheit (91), die Drahtloskommunikation durchführen, umfasst,
wobei das Industriefahrzeugfernbetriebsverfahren folgenden Schritte umfasst:
einen ersten Empfangsschritt (S202), in dem die erste Fahrzeugkommunikationseinheit (81), wenn in einem ersten Kommunikationsverbindungszustand eines kommunikativ mit einer ersten Zielfernkommunikationseinheit (60m) unter der Vielzahl von Fernkommunikationseinheiten (60a-60c) verbunden seins, das Fernbefehlssignal (SGa) empfängt, das von der ersten Zielfernkommunikationseinheit (60m) übertragen ist;
**dadurch gekennzeichnet, dass** das Industriefahrzeugfernbetriebsverfahren ferner folgenden Schritte umfasst:
einen Suchschritt, in dem das Industriefahrzeug (20) unter Verwendung der zweiten Fahrzeugkommunikationseinheit nach einer zweiten Zielfernkommunikationseinheit (60n) sucht, die sich von der ersten Zielfernkommunikationseinheit (60m) unterscheidet, unter der Vielzahl von Fernkommunikationseinheiten (60a-60c);
einen Bestimmungsschritt, in dem das Industriefahrzeug (20) bestimmt, ob die zweite Zielfernkommunikationseinheit (60n) und die zweite Fahrzeugkommunikationseinheit (91) kommunikativ zu verbinden sind oder nicht, basierend auf einer Empfangsfunkwellenintensität (Q1, Q2) eines Signals, das von der zweiten Zielfernkommunikationseinheit (60n) übertragen und durch die zweite Fahrzeugkommunikationseinheit (91) empfangen ist, in einer Situation des ersten Kommunikationsverbindungszustands;
einen Kommunikationsverbindungsschritt, in dem das Industriefahrzeug (20) die zweite Zielfernkommunikationseinheit (60n) und die zweite Fahrzeugkommunikationseinheit (91) basierend auf einem zustimmenden Bestimmungsergebnis des Bestimmungsschritts kommunikativ verbindet; und
einen zweiten Empfangsschritt (S402), in dem die zweite Fahrzeugkommunikationseinheit (91), wenn in einem zweiten Kommunikationsverbindungszustand eines kommunikativ mit der zweiten Zielfernkommunikationseinheit (60n) verbunden seins, das von der zweiten Zielfernkommunikationseinheit (60n) übertragene Fernbefehlssignal (SGa) empfängt, und
einen Verbindungsfreigabeschritt, in dem das Industriefahrzeug (20) den ersten Kommunikationsverbindungszustand freigibt, um es der ersten Fahrzeugkommunikationseinheit (81) zu ermöglichen, mit einer der Vielzahl von Fernkommunikationseinheiten (60a-60c) kommunikativ zu verbinden, basierend auf einem Empfang des Fernbefehlssignals (SGa) durch die zweite Fahrzeugkommunikationseinheit (91) von der zweiten Zielfernkommunikationseinheit (60n).

11. Industriefahrzeugfernbetriebsprogramm mit Anweisungen, die, wenn das Programm von einem Computer ausgeführt wird, den Computer veranlassen, das Verfahren nach Anspruch 10 durchzuführen.

## Revendications

1. Système de commande à distance (10) de véhicule industriel comprenant :
un véhicule industriel (20) ayant une pluralité d'unités de communication de véhicule incluant une première unité de communication de véhicule (81) et une seconde unité de communication de véhicule (91) qui réalisent une communication sans fil ;
un dispositif de commande à distance (40) ayant une pluralité d'unités de communication à distance (60a-60c) qui sont agencées en étant espacées les unes des autres et réalisent une communication sans fil, le dispositif de commande à distance (40) commandant à distance le véhicule industriel (20) par l'émission d'un signal d'instruction à distance (SGa) donnant l'instruction d'une commande à distance à l'aide d'au moins l'une de la pluralité d'unités de communication à distance (60a-60c), dans lequel
la première unité de communication de véhicule (81), lorsqu'elle est dans un premier état de connexion de communication dans lequel elle est connectée en communication à une première unité de communication à distance cible (60m) parmi la pluralité d'unités de communication à distance (60a-60c), reçoit le signal d'instruction à distance (SGa) émis à partir de la première unité de communication à distance cible (60m),
**caractérisé en ce que** le véhicule industriel (20) inclut
une unité de recherche (82, 92) qui recherche une seconde unité de communication à distance cible (60n) qui est différente de la première unité de communication à distance cible (60m) parmi la pluralité d'unités de communication à distance (60a-60c) à l'aide de la seconde unité de communication de véhicule (91),
une unité de détermination (82, 92) qui détermine s'il faut connecter en communication ou non la seconde unité de communication à distance cible (60n) et la seconde unité de communication de véhicule (91) sur la base d'une intensité d'onde radio de réception (Q1, Q2) d'un signal qui est émis à partir de la seconde unité de communication à distance cible (60n) et reçu par la seconde unité de communication de véhicule (91) dans une situation du premier état de connexion de communication, et
une unité de connexion de communication (82, 92) qui connecte en communication la seconde unité de communication à distance cible (60n) et la seconde unité de communication de véhicule (91) sur la base d'un résultat de détermination affirmatif de l'unité de détermination (82, 92),
la seconde unité de communication de véhicule (91), lorsqu'elle est dans un second état de connexion de communication dans lequel elle est connectée en communication à la seconde unité de communication à distance cible (60n), reçoit le signal d'instruction à distance (SGa) émis à partir de la seconde unité de communication à distance cible (60n), et
le véhicule industriel (20) inclut une unité de libération de connexion (82, 92) qui libère le premier état de connexion de communication de façon à permettre à la première unité de communication de véhicule (81) de se connecter en communication à l'une de la pluralité d'unités de communication à distance (60a-60c) sur la base du fait que la seconde unité de communication de véhicule (91) reçoit le signal d'instruction à distance (SGa) provenant de la seconde unité de communication à distance cible (60n).

2. Système de commande à distance (10) de véhicule industriel selon la revendication 1, **caractérisé en ce que** l'unité de détermination (82, 92) détermine si un état, dans lequel une seconde intensité d'onde radio de réception (Q1) jouant le rôle de l'intensité d'onde radio de réception (Q1, Q2) est supérieure à une première intensité d'onde radio de réception (Q1), qui est une intensité d'onde radio de réception (Q1, Q2) d'un signal qui est émis à partir de la première unité de communication à distance cible (60m) et reçu par la première unité de communication de véhicule (81), d'un seuil (δQ) ou de plus de celui-ci, se poursuit pendant une durée prescrite (Ta).

3. Système de commande à distance (10) de véhicule industriel selon la revendication 1, **caractérisé en ce que** l'unité de détermination (82, 92) détermine si l'intensité d'onde radio de réception (Q1, Q2) est progressivement augmentée pendant une durée prescrite (Ta).

4. Système de commande à distance (10) de véhicule industriel selon l'une quelconque des revendications 1 à 3, comprenant en outre une unité de connexion de communication précédente (82) qui connecte en communication la seconde unité de communication à distance cible (60n) et la seconde unité de communication de véhicule (91) sans attendre le résultat de détermination de l'unité de détermination (92) lorsque le premier état de connexion de communication est libéré dans une situation où une détermination est réalisée par l'unité de détermination (82, 92).

5. Système de commande à distance (10) de véhicule industriel selon l'une quelconque des revendications 1 à 4, **caractérisé en ce que**
l'unité de recherche (92) réalise de manière répétée un processus de recherche consistant à rechercher l'unité de communication à distance (60a-60c) existant au sein d'une plage de communication de la seconde unité de communication de véhicule (91), et sélectionne la seconde unité de communication à distance cible (60n) parmi une ou plusieurs unités de communication à distance (60a-60c) recherchées par le processus de recherche, et
l'unité de recherche (92) sélectionne de préférence l'unité de communication à distance (60a-60c) d'une cible de détermination actuelle de l'unité de détermination (82, 92) comme étant la seconde unité de communication à distance cible (60n) lorsqu'une pluralité des unités de communication à distance (60a-60c) est recherchée lors du traitement de recherche dans une situation où une détermination est réalisée par l'unité de détermination (82, 92).

6. Système de commande à distance (10) de véhicule industriel selon l'une quelconque des revendications 1 à 5, **caractérisé en ce que** le véhicule industriel inclut une unité de détermination d'anomalie de communication (82, 92) qui détermine une anomalie de communication lorsque le premier état de connexion de communication est libéré dans une situation où la seconde unité de communication à distance cible (60n) n'est pas recherchée par l'unité de recherche (82, 92) pendant une durée de détermination d'erreur.

7. Système de commande à distance (10) de véhicule industriel selon l'une quelconque des revendications 1 à 6, **caractérisé en ce que**
le véhicule industriel (20) inclut,
une première unité sans fil (80, 90) ayant un premier module sans fil (81) comme étant la première unité de communication de véhicule (81), et un premier micro-ordinateur sans fil (82) qui contrôle le premier module sans fil (82), et
une seconde unité sans fil (80, 90) ayant un second module sans fil (91) comme étant la seconde unité de communication de véhicule (91), et un second micro-ordinateur sans fil (92) qui contrôle le second module sans fil (91), et
la première unité sans fil et la seconde unité sans fil échangent des informations l'une avec l'autre.

8. Système de commande à distance (10) de véhicule industriel selon l'une quelconque des revendications 1 à 6, **caractérisé en ce que**
la première unité de communication de véhicule (81) est un premier module sans fil (81),
la seconde unité de communication de véhicule (91) est un second module sans fil (91), et
le système de commande à distance (10) de véhicule industriel inclut une unique unité sans fil ayant un micro-ordinateur sans fil qui contrôle le premier module sans fil (81) et le second module sans fil (91).

9. Véhicule industriel (20) configuré pour être commandé à distance par un signal d'instruction à distance (SGa), qui donne l'instruction d'une commande à distance, émis à l'aide d'au moins l'une parmi une pluralité d'unités de communication à distance (60a-60c) agencées en étant espacées les unes des autres dans un dispositif de commande à distance (40), dans lequel
le véhicule industriel (20) comprend une pluralité d'unités de communication de véhicule incluant une première unité de communication de véhicule (81) et une seconde unité de communication de véhicule (91) qui réalisent une communication sans fil,
la première unité de communication de véhicule (81), lorsqu'elle est dans un premier état de connexion de communication dans lequel elle est connectée en communication à une première unité de communication à distance cible (60m) parmi la pluralité d'unités de communication à distance (60a-60c), reçoit le signal d'instruction à distance (SGa) émis à partir de la première unité de communication à distance cible (60m),
le véhicule industriel (20) étant **caractérisé en ce qu'**il inclut
une unité de recherche (82, 92) qui recherche une seconde unité de communication à distance cible (60n) qui est différente de la première unité de communication à distance cible (60m) parmi la pluralité d'unités de communication à distance (60a-60c) à l'aide de la seconde unité de communication de véhicule (91),
une unité de détermination (82, 92) qui détermine s'il faut connecter en communication ou non la seconde unité de communication à distance cible (60n) et la seconde unité de communication de véhicule (91) sur la base d'une intensité d'onde radio de réception (Q1, Q2) d'un signal qui est émis à partir de la seconde unité de communication à distance cible (60n) et reçu par la seconde unité de communication de véhicule (91) dans une situation du premier état de connexion de communication, et
une unité de connexion de communication (82, 92) qui connecte en communication la seconde unité de communication à distance cible (60n) et la seconde unité de communication de véhicule (91) sur la base d'un résultat de détermination affirmatif de l'unité de détermination (82, 92),
la seconde unité de communication de véhicule (91), lorsqu'elle est dans un second état de connexion de communication dans lequel elle est connectée en communication à la seconde unité de communication à distance cible (60n), reçoit le signal d'instruction à distance (SGa) émis à partir de la seconde unité de communication à distance cible (60n), et
le véhicule industriel (20) inclut une unité de libération de connexion (82, 92) qui libère le premier état de connexion de communication de façon à permettre à la première unité de communication de véhicule (81) de se connecter en communication à l'une de la pluralité d'unités de communication à distance (60a-60c) sur la base du fait que la seconde unité de communication de véhicule (91) reçoit le signal d'instruction à distance (SGa) provenant de la seconde unité de communication à distance cible (60n).

10. Procédé de commande à distance de véhicule industriel qui utilise un dispositif de commande à distance (40) pour commander à distance un véhicule industriel (20), le dispositif de commande à distance (40) ayant une pluralité d'unités de communication à distance (60a-60c) qui sont agencées en étant espacées les unes des autres et réalisent une communication sans fil, et émettant un signal d'instruction à distance (SGa) donnant l'instruction d'une commande à distance à l'aide d'au moins l'une de la pluralité d'unités de communication à distance (60a-60c), le véhicule industriel (20) ayant une pluralité d'unités de communication de véhicule incluant une première unité de communication de véhicule (81) et une seconde unité de communication de véhicule (91) qui réalisent une communication sans fil,
le procédé de commande à distance de véhicule industriel comprend les étapes suivantes :
une première étape de réception (S202) dans laquelle la première unité de communication de véhicule (81), lorsqu'elle est dans un premier état de connexion de communication dans lequel elle est connectée en communication à une première unité de communication à distance cible (60m) parmi la pluralité d'unités de communication à distance (60a-60c), reçoit le signal d'instruction à distance (SGa) émis à partir de la première unité de communication à distance cible (60m) ;
**caractérisé en ce que** le procédé de commande à distance de véhicule industriel comprend en outre les étapes suivantes :
une étape de recherche dans laquelle le véhicule industriel (20) recherche une seconde unité de communication à distance cible (60n) qui est différente de la première unité de communication à distance cible (60m) parmi la pluralité d'unités de communication à distance (60a-60c) à l'aide de la seconde unité de communication de véhicule ;
une étape de détermination dans laquelle le véhicule industriel (20) détermine s'il faut connecter en communication ou non la seconde unité de communication à distance cible (60n) et la seconde unité de communication de véhicule (91) sur la base d'une intensité d'onde radio de réception (Q1, Q2) d'un signal qui est émis à partir de la seconde unité de communication à distance cible (60n) et reçu par la seconde unité de communication de véhicule (91) dans une situation du premier état de connexion de communication ;
une étape de connexion de communication dans laquelle le véhicule industriel (20) connecte en communication la seconde unité de communication à distance cible (60n) et la seconde unité de communication de véhicule (91) sur la base d'un résultat de détermination affirmatif de l'étape de détermination ; et
une seconde étape de réception (S402) dans laquelle la seconde unité de communication de véhicule (91), lorsqu'elle est dans un second état de connexion de communication dans lequel elle est connectée en communication à la seconde unité de communication à distance cible (60n), reçoit le signal d'instruction à distance (SGa) émis à partir de la seconde unité de communication à distance cible (60n), et
une étape de libération de connexion dans laquelle le véhicule industriel (20) libère le premier état de connexion de communication de façon à permettre à la première unité de communication de véhicule (81) de se connecter en communication à l'une de la pluralité d'unités de communication à distance (60a-60c) sur la base du fait que la seconde unité de communication de véhicule (91) reçoit le signal d'instruction à distance (SGa) provenant de la seconde unité de communication à distance cible (60n).

11. Programme de commande à distance de véhicule industriel comprenant des instructions qui, lorsque le programme est exécuté par un ordinateur, amènent l'ordinateur à mettre en œuvre le procédé selon la revendication 10.
